**Europäisches Patentamt**

(18) **European Patent Office**

**Office européen des brevets**

(11) Publication number: **0 179 870**
**B1**

(12) # EUROPEAN PATENT SPECIFICATION

(45) Date of publication of patent specification: **24.01.90**

(21) Application number: **85902313.7**

(22) Date of filing: **17.04.85**

(86) International application number:
**PCT/US85/00703**

(87) International publication number:
**WO 85/04819 07.11.85 Gazette 85/24**

(51) Int. Cl.⁵: **B 01 D 17/06,** B 03 C 5/00,
C 10 G 32/02

(54) **SEPARATION OF DISPERSED PHASE FROM CONTINUOUS PHASE.**

(30) Priority: **17.04.84 US 601253**
**17.04.84 US 601254**
**17.04.84 US 601271**
**17.04.84 US 601272**
**17.04.84 US 601276**
**11.04.85 US 722163**
**11.04.85 US 722160**

(43) Date of publication of application:
**07.05.86 Bulletin 86/19**

(45) Publication of the grant of the patent:
**24.01.90 Bulletin 90/04**

(84) Designated Contracting States:
**BE DE FR GB IT NL**

(56) References cited:
**US-A-2 039 636**   **US-A-2 151 318**
**US-A-2 060 839**   **US-A-2 174 938**
**US-A-2 061 197**   **US-A-2 440 504**
**US-A-2 109 131**   **US-A-3 129 157**
**The file contains technical information
submitted after the application was filed and
not included in this specification**

(73) Proprietor: **Exxon Research and Engineering
Company**
**P.O.Box 390 180 Park Avenue**
**Florham Park New Jersey 07932 (US)**

(72) Inventor: **CERKANOWICZ, Anthony, E.**
**8 Fieldstone Drive**
**Livingston, NJ 07039 (US)**
Inventor: **MINTZ, Donald, J.**
**83 Seven Oaks Drive**
**Summit, NJ 07901 (US)**
Inventor: **BRONS, Cornelius, H.**
**41 Fairview Street**
**Washington, NJ 07882 (US)**
Inventor: **CHIMENTI, Robert, J., L.**
**63 Great Hills Road**
**Short Hills, NJ 07078 (US)**
Inventor: **SMITH, Floyd, E.**
**2 Shagbark Lane**
**East Windsor, NJ 08520 (US)**
Inventor: **KELLY, Arnold, J.**
**8 Hathaway Drive**
**Princeton Junction, NJ 08550 (US)**
Inventor: **GLEASON, Anthony, M.**
**127 Washington Street**
**Westfield, NJ 07090 (US)**
Inventor: **RYAN, Douglas, G.**
**145 Andrea Drive**
**Rockaway, NJ 07866 (US)**

Courier Press, Leamington Spa, England.

EP 0 179 870 B1

(56) References cited:
US-A-3 616 460
US-A-3 928 158
US-A-4 139 441
US-A-4 194 956
US-A-4 200 509
US-A-4 255 777
US-A-4 334 987

(74) Representative: Mitchell, Alan et al
ESSO Engineering (Europe) Ltd. Patents &
Licences Apex Tower High Street
New Malden Surrey KT3 4DJ (GB)

## Description

This invention relates to a method and apparatus for use in the separation of a dispersed phase (contaminant) from a phase mixture comprising the contaminant phase dispersed in a continuous liquid phase. The contaminant phase may be a solid, liquid, gel or gas or any combination of these. Examples of contaminants are carbonaceous solids, metal and metals oxides (e.g., alumina fines), composites, water droplets, polymer chains and precipitates (such as wax crystals, asphaltenes, hot filtration sediment, and high molecular weight polar compounds). By "dispersed phase" is intended to be conveyed the meaning that the dispersed phase is discontinuous and immiscible in the continuous phase. Examples of the application of this invention are the removal of particulate material, such as wax crystals, from a liquid stream or dispersed water droplets from lube stocks and other oils. Further possible applications of the invention are emulsion breakage, dehazing fuel oil, removal of fine particles from refinery process streams, particulate separation in coal liquefaction and oil shale processes, and removal of coagulated metal-rich fractions from residua. The invention also finds application to clarifying a contaminated liquid where the contaminant is a dissolved contaminant.

One area of particular interest so far as the present invention is concerned is the separation of wax particles and/or water droplets from a hydrocarbon oil mixture boiling in the lubricating oil range, in which mixture the wax/water forms a dispersion. The term "wax particles" herein means wax in any particulate form and includes wax crystals. Furthermore, throughout this specification, it is to be understood that "hydrocarbon oil mixture" and "oil mixture" both mean a hydrocarbon oil mixture boiling in the lubricating oil range.

The problems of wax or water in lubricating oil are very well known in the art. In the distillation of crude oil, a proportion of wax is present in cuts taken in the lubricating oil range. Some of the wax remains dissolved in the oil, whereas other fractions form a haze as the oil fraction ages at ambient temperatures or below. Wax in itself is in fact a good lubricant but under comparatively low temperatures such as engine cold start conditions, its presence causes the oil to be thick and viscous and as a result the engine may be hard to turn over at sufficient speed during starting. In the case of water droplets, which include both very tiny water droplets (less than about 1 mm in diameter and exemplified by approximately 1 to 100 μm diameter droplets) and water molecules suspended in the lubricating oil, they detrimentally affect the lubricating properties of the oil and increase engine wear and corrosion. Haze manifests itself as a milky or cloudy appearance in the oil and is usually caused by either water or wax or both water and wax being present in the lubricating oil. Typically a minimum of about 50 ppm, of water or a minimum of about 0.1% by volume of wax will cause some lubricating oils to look hazy. Therefore the existence of haze caused by the presence of water droplets or wax crystals or particles detrimentally affects the performance of lubricating oils. It is of paramount practical importance to devise techniques for removing wax and/or water haze from lubricating oil in a relatively inexpensive, simple and effective manner, which techniques are also capable of implementation on an industrial scale.

Numerous electrical separation or electrofiltration techniques in various forms for the removal of dispersed contaminants from continuous background liquid phases are known in the art. Many of these techniques involve the application of an external electric field which, by electrophoresis or dielectrophoresis, drives the contaminant dispersion to a collection and separation region where, in the case of particulate contaminant for example, the contaminant collects the builds up on one or more collector surfaces.

It is also remarked that known separation techniques such as described above can operate quite satisfactorily in practice, but have the disadvantage that they are not particularly effective in the case of wax, water or other contaminant particle, droplet or bubble sizes below a certain level (especially of the order of submicron-size or micron-size diameter—for example about 0.1 to 100 μm). This may be due to the fact that the electrostatic force acting on each individual particle due the applied electric field becomes insufficient, when the particle or droplet size becomes sufficiently small, having regard to the viscous drag forces exerted by the oil or continuous background phase and the maximum possible charge level on the individual particles or droplets.

U.S. Patent 4,341,617 (King) uses sharply pointed projections on one electrode of a pair of oppositely charged electrodes associated with a treating chamber in an electrostatic treater for waste liquid, to concentrate the electric field at the projection tips for encouraging flocculation of impurity particles carried by the waste liquid. In another arrangement, the projection tips inject charge carriers into the waste liquid and a resulting electrical current flow is established through the waste liquid between the two electrodes. The net positive charge due to the flow of positive ions in one direction exactly equals the net negative charge due to the flow of negative ions in the opposite direction.

Reference is also directed to U.S. Patent 3,324,026 (Waterman et al) which discloses an electric filter for removing suspended contaminants from substantially water-free, high resistivity oils. The contaminated oil is flowed through the pores of individual elements of porous material forming a multielement mass filling a treating space between two electrodes which maintain a high-gradient unidirectional electric field in the treating space. Before the oil is passed through the multi-element mass, it may be subjected to electrical discharge or blast action by a plurality of relatively sharp pointed pins of one polarity facing but spaced from a member of opposite polarity.

It is also known from U.S. Patent 3,412,002 (Hubby) to break water-in-oil emulsions electrophoretically by charging the water particles in a stream of the emulsion by physical contact with a high voltage electrode and deflecting the charged droplets laterally with respect to the stream by a transverse magnetic field.

Reference is also directed to U.S. Patent 4,255,777 (Kelly), assigned to the present assignees. This patent specifically discloses an electrostatic atomizing device and process for the formation of electrostatically charged droplets having an average diameter of less than about 1 millimeter for a liquid having a low electrical conductivity. Envisaged applications of the electrostatic atomizing technique are for spraying cleaning fluid onto the surface of an article to be cleaned, for spraying agricultural liquid, such as an insecticide, onto vegetation or soil, for spraying lubricant onto bearings and gears of large industrial machinery, for surface coating an article by spraying a solution of a plastic dissolved in a nonconductive liquid or an oil-based paint, to inject free excess charge into a molten plastic, glass or ceramic, and for spraying liquified plastic material for forming surface coatings. Another possible application is to produce charge droplets of liquid e.g. paint within a body of the same liquid which is in contact with a metal surface, so that the charged droplets deposit as a coating on the metal surface. Charged droplets of for example perfume could be sprayed onto oppositely charged powder e.g. talcum powder. Yet another application is the atomization of hydrocarbon fuels, for increasing combustion efficiency. However, the Kelly patent neither discloses nor suggests that charge introduced into a continuous liquid phase transfers therefrom to the dispersed phase and that an electrophoretic effect occurs which causes migration of the dispersed phase in the liquid phase, nor even suggests any kind of application to electrical separation.

Reference is also direction to U.S. Patent 4,435,261 (Mintz et al), assigned to the present assignees, which discloses a technique for the free radical polymerization of liquid monomers into thermoplastic polymers. Free excess charge is injected into the liquid monomer, so as to initiate polymerization of the monomer into a polymer.

Attention is directed to U.S. Patent 2,039,636 (Dillon et al), which discloses the introduction, simultaneously, of finely divided solids, such as lamp-black or gas-black, and electrolytes into a wax-bearing oil-diluent solution, in order to have a beneficial effect on settling and electrical separation processes, to which the solution is subjected.

Electrical separators are disclosed in both U.S. patent 3,129,157 (Loeckenhoff) and U.S. Patent 3,489,669 (Ruhnke) in which a particle-laden liquid is passed through an electrical treater so that the particles become charged and the charged particles are collected on the inner wall surfaces of a dielectric conduit located downstream of the treater. Unlike in the method of the present invention however, the electrical treater comprises a corona point ionizer. Furthermore, in contrast with the apparatus of the present invention, in each of the above two U.S. patents the particle-laden liquid leaving the corona point ionizer enters directly into the downstream conduit which is completely filled with the liquid, so that there is no gas or vapour space between the corona point ionizer and the liquid in the conduit.

According to the invention from one aspect, there is provided a method for separation of a dispersed phase from a continuous liquid phase by introducing net unipolar free charge into the mixture of said phases so as to bring about migration of the dispersed phase within the phase mixture, and allowing the migrating dispersed phase to accumulate on at least one collector surface which is disposed in contact with the charged mixture, characterised in that the net unipolar free charge is introduced, substantially, by electron emission in the absence of ionic dissociation, which causes the continuous phase to act as a medium through which volumetric distribution of the introduced charge takes place by charge motion relative to the continuous liquid phase.

According to the invention from another aspect there is provided an apparatus for use in separating a dispersed phase from a continuous liquid phase, the phases together forming a phase mixture, comprising:

means for constraining said phase mixture to flow through an enclosed space filled by said phase mixture;

an exit orifice through which the phase mixture leaving the enclosed space passes;

means arranged to introduce charge, preferably free net unipolar charge, into the flowing phase mixture before the phase mixture enters said exit orifice; and

a separator arranged to receive the charged phase mixture from said orifice, said separator having at least one dispersed phase collector surface disposed in contact with said charged phase mixture so that dispersed phase migrating in said phase mixture due to the introduced charge accumulates on said collector surface(s); characterised in that

said apparatus comprises means providing a gas or vapour space between said exit orifice and said separator such that the charged phase mixture passes through said gas or vapour space as a spray or stream enveloped by gas or vapour in said gas or vapour space.

According to the invention from a third aspect there is provided an apparatus for use in separating a dispersed phase from a continuous liquid phase, the phases together forming a phase mixture, comprising:

means arranged to deliver said phase mixture;

means for constraining a substantially contaminant-free liquid to flow through an enclosed space filled by substantially contaminant-free liquid;

an exit orifice through which the substantially contaminant-free liquid leaving the enclosed space passes;

means arranged to introduce net unipolar free charge into the flowing substantially contaminant-free liquid before it enters said exit orifice;

a separator arranged to receive the charged substantially contaminant-free liquid from said orifice and phase mixture from said delivery means which together form the liquid contents of the separator, said separator having at least one dispersed phase collecting surface disposed in contact with said liquid contents so that dispersed phase migrating in the liquid contents due to the introduced free charge accumulates on said collector surface(s); and

means providing a gas or vapour space between said exit orifice and said separator such that the charged substantially contaminant-free liquid passes through said gas or vapour space as a spray or stream enveloped by gas or vapour in said gas or vapour space.

In putting the apparatus and method of the present invention into operation, two stsps are performed. In the first step, free charge that is net unipolar, i.e. net positive or net negative, is introduced into the mixture of continuous and dispersed phases to bring about migration of dispersed phase (such as in the form of bubbles, particles or droplets) under the influence of an interaction which occurs between the electric field, which is self-induced in the mixture itself, and the introduced charge which has transferred from the continuous phase to the dispersed phase. The free excess charge is introduced without any ionic dissociation of the continuous phase occurring, e.g. due to corona discharge. The meaning of the term "ionic dissociation" is well known in the art, but for the avoidance of doubt, refers to dissociation, whether local or catastrophic, in the continuous phase into ionized atoms or molecules when a critical threshold valve of an electric field acting on the continuous phase is exceeded, resulting in the production of equal numbers of charges of both polarities. Free charge is positive or negative ions which, initially, are free to move through the continuous phase. The continuous phase acts as a medium through which volumetric distribution of the introduced charge occurs, so as to establish the induced electric field in the mixture. The second step in the electrical separation process involves allowing the migrating dispersed phase to accumulate on one or more collector surface(s) in contact with the phase mixture in the path of the migration dispersed phase.

It is stressed that the electric field is the result not of any voltage applied to any external electrodes so as to set up an electric field between those electrodes, but rather arises from the total introduced or injected charge distribution in the continuous phase and on the dispersed phase and the collector surface regions where separation occurs.

The basis for the effective separation that can be achieved when putting this invention into effect is believed by the inventors to be as follows. The first step in the process is the production of an excess (i.e. net unipolar-positive or negative) charge density in the otherwise electrically-neutral phase mixture. Several techniques are available to produce a transient or steady-excess charge density. Broadly speaking, such methods fall into two general categories, namely: (1) injection of excess charge across the interface or boundary which confines the phase mixture, and (2) volumetric charge introduction techniques into the bulk of the phase mixture. Examples of the first category include electron beam and high energy particle radiation, photoemission and charge transport by a moving fluid. Another example is charge injection as taught in the aforesaid Kelly U.S. Patent 4,255,777. Examples of the second category are photoionization of either or both of the dispersed phase and the continuous phase and secondary ionization by thermalization of high energy particle irradiation of the phase mixture. These examples of the second category are excluded from the method (but not apparatus) of the present invention because they involve ionic dissocation in the continuous liquid phase.

It is necessary that there be an excess of free charge in the phase mixture in the sense of a sufficient abundance that an effective migration of dispersed phase will occur. Typically, the density of the free charge would be of the order of $10^{16}$ charges per $m^3$. A lower limit would be about $1 \times 10^{10}$ charges per $m^3$. A typical preferred range of free charge density is about $1 \times 10^{13}$ to $1 \times 10^{19}$ charges per $m^3$ or even higher, for providing effective migration of the dispersed phase.

The charge introduced into the phase mixture to be clarified must be net negative or net positive. However, providing this requirement is met, then it is equally possible to introduce the excess charge using two streams of opposite but unequal levels of charge or alternating net positive and net negative streams for the purpose of dispersed phase agglomeration prior to collection, in the first case, or multilayer precipitation in the second case (e.g., collecting a net negative layer then a net positive layer, and so forth, of the dispersed phase).

The second step in the process is the transference of the major portion of the excess charge to the dispersed phase in the liquid phase. In a preferred way of performing the invention in which a charge injector, such as disclosed in the aforesaid U.S. Patent 4,255,777, is used for introducing net unipolar free excess charge into a dispersed phase laden stream, the stream issues from the charge injector as a continuous stream or spray through a gas or vapor space, and enters a separation vessel where a body of charged liquid phase mixture is collected. The gas or vapor space is provided to enable the charged liquid to exit the charge injector with high velocity to efficiently sweep out the injected charge and also to eliminate any charge dissipation path back to the charge injector. Such decoupling of the separation vessel from the charge injector is important for achieving a high level and high efficiency of charge injection. It is of no particular importance to the effective removal of contamination whether the contaminated liquid phase is sprayed by the charge injector or simply issues as a continuous stream into the separation vessel, particularly at relatively high velocity throughputs in the charge injector. However, when the contaminated liquid phase is sprayed, the individual liquid droplets are in general separated from one another and this can be important where lower throughput velocities, closer to the drift velocity of the individual charges, are employed. It is, however, remarked that it is important that there be no contact between the charged spray or stream passing through the gas or vapor space and any surrounding wall electrically connecting the separation vessel wall to the charge injector, in order to avoid charge dissipation. Suitably, the gas or vapor space is enclosed and a purge gas, e.g., nitrogen, circulated through the space to avoid any risk of explosion or chemical reaction. In addition, the purge gas helps to obtain uniform separation results irrespective of changes in ambient conditions, especially humidity, which if present could affect the rate of depletion of chrage. In the absence of any such gap, reduced separation efficiencies will result. According to a development, the gas or vapor space is pressurized which can maintain a satisfactory throughput rate in the separation vessel even for rather viscous liquids and can increase the throughput rate for less viscous liquids.

In the separation region, it is assumed that the excess charge density exceeds the liquid background charge density (i.e. the density of bipolar charge carries which are intrinsic to the liquid and which result in the conductivity of the liquid); then the induced electric field in the separation region caused by the excess charge density will act on the individual charge carriers and drive them to the boundaries of the liquid mixture. Some of the charge will be intercepted by the individual contaminants (droplets, particles or bubbles) of the dispersed phase and these contaminants will thereby become charged. The interaction which then occurs between the charge on the contaminants and the induced electric field causes the contaminants to migrate towards the boundaries of the liquid mixture.

The next part in the process involves the accumulation of the migrating wax/water on the collector surfaces provided by the separation vessel. These collector surfaces can be provided by the internal surfaces of the separation vessel wall or internal surfaces within the separation vessel interior. In a preferred arrangement, the collector surfaces are provided by a bed of densely packed dispersed phase collector beads of low electrical conductivity inside the separation vessel. The charged contaminants will congregate on the collector surfaces (vessel and/or beads) and form into accumulations by interaction between the individual contaminants. This will manifest itself in the form of agglomeration and coalescence (for droplets) or merely agglomeration and deposition in the case of solid particles and gas.

Finally, accumulated dispersed phase needs to be removed or separated from the oil mixture. For collected liquid dispersed phase, the droplets continue to coalesce until sufficiently large droplets are formed on the collector surfaces that they separate from the collector surfaces under gravity and re-enter the bulk liquid mixture as very much larger droplets. These droplets are allowed to settle to form a distinct continuous liquid phase in the separation vessel, which can then be separated, for example by tapping off, from the other liquid phase. Other separation techniques which are well known in the art, for example centrifuging, can be used instead. Alternatively, the microscopic water droplets may congregate on the separation vessel walls without any appreciable droplet size growth or settling, leaving clarified liquid phase in the bulk of the separation vessel interior which can then be discharged. Both effects may occur at the same time. In the case where particles are collected, periodic cleaning of the collector surfaces by back-flushing, solvent washing, heating, and other techniques which are well known to those in the art can be used. This would be appropriate for collector beads for example. For a drum collector surface or other moving surface used to separate wax from lube oil for example, the wax can be scraped off by a stationary scraper blade.

It is mentioned that in the absence of any collector surfaces within the vessel containing the charged contaminated liquid, charged dispersed phase particles (or droplets or bubbles as the case may be) will be driven by the induced field to the outer boundaries of the vessel containing the liquid. Thus, if the vessel is one foot in diameter, the average particle will have to migrate several inches before reaching the walls of the vessel. If the particles are small and the liquid is viscous, the time for this migration is large. During this time some of the charge on the particles will be reduced due to Ohmic losses. A reduction in the charge on a particle results in a reduction in collection efficiency. It is now recognized that the migration path length and hence the migration time are inversely related to the collection efficiency. Increased collection efficiency is accomplished by one or more collector surfaces, such as a multiplicity of collector beads, in the bulk of the liquid.

It follows that in a preferred form, the collector surfaces on which the migrating contaminant accumulates are provided by beads. Preferably, the vessel interior contains a bed of beads which may be stationary, moving or fluidized and closely packed across the cross-section of the vessel. In this way, the average migration path length is kept to a very small value compared with the cross-sectional dimensions of the vessel, resulting in high separation effectiveness. In addition, the smaller the size (diameter) of the beads, the more closely packed they will be and hence the shorter the migration path.

The beads should be made of low conductivity material, otherwise they will conduct-away the charge and deplete the induced electric field. Suitable materials from which the beads can be made are dielectric material, plastics material, ceramic material and glass.

In often particularly suitable form for use in separating a dispersed particulate contaminant from a continuous liquid phase, the bed of beads substantially but not completely fills the vessel and the charge introducing means is a charge injector positioned above the vessel for discharging charged mixture to be clarified into the vessel through a gas or vapor space, the vessel having an outlet for clarified liquid phase, which outlet may be in the side wall of the vessel below the top of the bed of beads, preferably close to the bottom.

It is to be noted that the collector surfaces need not necessarily, be stationary. For example, the stream of charged liquid issuing from the charge injector could be seeded with collector beads before the stream enters the separation vessel and the beads removed from the liquid again at a downstream location, in the separation vessel itself for example. Alternatively, the bed of beads can be fluidized. One way in which this can be achieved is using a concentric cylinder arrangement for the separation vessel with the beads at least partially filling the annular gap between the two cylinders and pressurizing the gas space above the separation vessel to drive the charge fluid inside the cylinder into the annular space from below.

In the case of migrating liquid contaminant droplets, these are driven to, accumulate at and may coalesce on, the collector surfaces. There may be some coalescence of these microscopic droplets to form into droplets of much larger size which become re-entrained into or re-enter the phase mixture. In the case of gaseous contaminants, these congregate on the collector surfaces either without any coalescence or with some coalescence to agglomerate into large-sized bubbles, the bubbles becoming detached from the collector surface. Solid contaminant particles or a gel will accumulate on the collector surfaces and build up into a layer or coating on the collector surfaces. In some instances, pieces of agglomerated contaminant may break away from the collector surfaces. Removal or separation of the accumulated contaminant is carried out as described above for the case where the collector surfaces are provided by the separation vessel wall itself.

It will be appreciated that the viscosity and conductivity of the background phase need to be sufficiently low such that the contaminant can reach the vessel walls before any appreciable leakage or depletion of its charge can take place such as would diminish to an ineffective level the electrical migration force acting on the contaminant. Typically, the product of the viscosity and conductivity of the continuous liquid phase would be less than $10^{-7}$ mPa · s/ohm-meter, but this is not to be regarded as limitative in any way.

It is to be noted that when using a charge injector to introduce the net unipolar free charge, it is important that the stream velocity through the charge injector is high enough to transport the charged stream away from the electrode region of the charge injector. Ideally, the stream velocity needs to exceed the drift velocity of the individual charges relative to the liquid induced by the electric field produced by the charge injector electrodes. On the other hand, the liquid in the separation vessel needs to remain there long enough to enable contaminant migration to the vessel walls. This generally requires a much lower velocity throughput in the separation vessel than in the charge injector. Typical values for the throughput velocities in the charge injector and separation vessel are 1 m/sec and 0.05 to 1 cm/sec, respectively. In another embodiment the internal cross-sectional diameters of the separation vessel and the injector orifice diameter are for example 5 to 10 cm and 0.025 cm, respectively. These are purely exemplary and have no limiting character.

It is to be noted that either "batch" or "continuous" electrical treatment of the liquid phase mixture can be effected. In batch treatment, the contaminated liquid to be treated is suitably introduced into the separation vessel, after having free charge introduced into the oil mixture, and the collected dispersed phase is recovered in any suitable way, such as described above. Afterwards, the clarified background liquid phase is discharged from the separation vessel and then the next batch introduced into the separation vessel for treatment. In a modified form of batch treatment, the liquid phase mixture is continuously cycled through the charge introduction stage followed by the separation vessel and then back to the charge introduction means, until the required level of clarification of the background liquid phase is achieved. In the "continuous" recovery process, the contaminated liquid phase is continuously passed through the successive stages of the separation process.

According to a development of the concepts described above, where the contaminant is dissolved in the continuous liquid phase or even where the contaminant is in the form of a dispersion of fine droplets or particles, an additive may be added to the contaminated liquid phase which combines with the contaminant to form a dispersion in the continuous liquid. That dispersion can then be separated according to the techniques described above.

Most suitably, the additive will combine with the contaminant physically or chemically. For example, it is preferred that the additive have sorbent properties, in particular adsorbent properties. A preferred application is the separation of a dissolved contaminant from a liquid, in which case the additive may comprise finely divided solid particles of sorbent material. Alternatively, it is feasible for the additive to be selected so that it will combine electrically with the contaminant, e.g. by electrostatic attraction.

According to another development, where a dispersed liquid phase is to be separated from a continuous liquid phase the or each collector surface may be provided by porous material having a surface region which is exposed to the migrating dispersed liquid phase, the porous material promoting liquid phase growth at separate sites on the aforesaid surface region.

"Porous material" and "porosity" are used to convey the idea of a material and property of a material, respectively, having a random network of channels or the like traversing the bulk of the material and some channels intersecting the surface. The porous material soaks up the contaminant liquid phase in its pores and promotes growth of the contaminant liquid phase at separated sites on the exposed surface region of the porous material.

A preferred application of the invention is the separation of wax and water from lube oil. For wax particles and water droplets, these can be separated from the lube oil by techniques as described above. Wax collection can be effected using a bead separator or a rotary collector drum separator. Where the wax is present as dissolved wax, the lube oil needs to be cooled to precipitate the dissolved wax as wax particles. The wax precipitation may be assisted by mixing an oil solvent with the lubricating oil. "Oil solvent" as used throughout this specification refers to those solvents which when added to an oil mixture result in a lower viscosity for the solvent-oil mixture than for the oil mixture alone. This is beneficial for enhancing the settling or filtration processes used to separate the precipitated wax from the solvent-oil mixture. Usually, the oil solvent will have the additional property of having a higher solubility for the oil mixture than for the wax at any given temperature, so that during chilling of the solvent-oil mixture to precipitate wax, the wax precipitation is enhanced. Liquified hydrocarbon alkanes or alkenes, ketones, toluene or other aliphatics, and light organic chlorides are examples of well-known oil solvents. When the wax-laden oil is cooled, then as the temperature of the oil is reduced, different wax fractions start to come out of solution, aided by the oil solvent. Propane is an example of a preferred oil solvent because in addition to its oil solvent properties, it boils or vaporizes at typically encountered conditions of temperature and pressure in propane dewaxing processes, and this in turn leads to an auto-refrigeration effect which can be used to bring about the desired cooling, at least in part, of the wax-laden oil. This in some instances obviates the need for a refrigerating or chiller unit in which the oil mixture is cooled by indirect heat exchange with a cooling medium, or in others reduces the refrigeration capacity requirement of the refrigeration or chiller unit.

Preferred oil solvents for separating wax from a hydrocarbon oil mixture include liquid propane or any liquid hexane, alkane or alkene whose molecular weight is between 16 and 114, or any other oil solvent whose electrical conductivity is less than about $10^{-8}$ $(ohm \cdot m)^{-1}$. Preferably, the temperature of the wax-containing oil mixture is in the range 140°F (60°C) to 200°F (93.3°C) before it is mixed with the oil solvent liquid whose temperature is in the range of 60°F (15.6°C) to 200°F (93.3°C). These temperature ranges help to ensure that the oil solvent dissolves thoroughly and readily in the oil mixture.

Other ways exist to alter the solubility of the wax in the oil mixture. To wax-containing oil mixture already diluted with an oil solvent liquid can be added a liquid additive which alters the chemical or physical state of the solvent by chemical reaction between the additive and solvent or, where the additive is a solvent absorber, by the selective absorption of the solvent by the additive. A second example is to utilize the vapor pressure of the oil mixture such as by venting or drawing vacuum. Alternatively, oil solvent vapor in the gas or vapor atmosphere above a body of oil solvent/lube oil can be selectively removed from the atmosphere to bring about wax precipitation.

It is to be noted that wax and lube oil are chemically similar but have differing molecular weights. To facilitate precipitation of dissolved wax, an additive may be used such as a high molecular weight hydrocarbon, containing an amine group.

It will be appreciated that the separation technique described is not limited to separating either wax or water from the lube oil mixture. They can usually both be removed from the lube oil at the same time. Furthermore, the technique is not selective for removing only wax and water from lubricating oil, but will also be effective for separating other contaminant particles such as grit, catalyst fines, asphaltene particles, oxide scale, corrosion scale and other corrosion products, coke fines and the like which may also be present with the wax either singularly or in some combination.

With the present invention, it is possible to provide an apparatus and method for the effective separation of dispersed phase from a continuous liquid phase, especially where the mean contaminant size is very small (e.g. of the order of 0.1 to 100 µm or even 1 mm in diameter).

The contaminant separation apparatus can be made to be simple in construction and reliable in operation, whilst a contaminant separation method can be provided which is simple to put into effect. With the invention, it is possible to attain a high level of purity of the clarified continuous phase.

It will be appreciated that the invention is not limited to separating a single contaminant from the mixture. Two or more contaminant species may be separated, providing each of them forms, or the contaminant phases are combined to form, a dispersed phase within the background fluid phase.

For a better understanding of the invention and to show how the same may be carried into effect, reference will now be made, by way of example, to the accompanying drawings, in which:

Figure 1 shows, diagrammatically, a vertical section through one form of dispersed phase (contaminant) separation apparatus in accordance with the invention, adapted for the removal of particulate contaminant from a liquid stream, employing recycling a batch sample;

Figures 2 and 3 are similar views of further embodiments, for batch and continuous treatment, respectively;

Figures 4 and 5 are corresponding views of further embodiments each including a bed of beads, the beads in Figure 4 being of low electrical conductivity and those of Figure 5 being porous;

Figure 5a is an enlarged partial view of a group of porous beads, showing how migrating droplets coalesce and agglomerate on the surface of the beads and are then re-entrained into the liquid mixture;

Figure 5b is an enlarged vertical section through a single porous bead;

Figure 6 is a view similar to Figure 5 but showing a porous-membrane collector structure used in place of the beads;

Figure 6a is a perspective view of the membrane collector structure;

Figure 6b is a perspective view of a detail of Figure 6a;

Figure 6c is an enlarged vertical section through a portion of the porous membrane, on an exposed surface of which fine water droplets are agglomerating and coalescing;

Figures 7 and 8 are vertical section views through two similar forms of separation apparatus for removal of water droplets, and any wax particles that may be present, from lube oil;

Figure 9 is a schematic view of a different form of separation apparatus which is specially designed for separating wax from lube oil and uses a drum collector for this purpose;

Figure 10 is a development of Figure 4 showing an embodiment, including a bead separator, used for separating wax from lube oil where dissolved wax is present;

Figure 11 is a corresponding development of Figure 9;

Figures 12 to 15 illustrates how the conductivity and absorbency of vacuum resid in a lubricating oil vary for different concentrations of vacuum resid, and how they are reduced after the addition of carbon black particles and treatment in the apparatus of Figure 4;

Figure 16 is a graph depicting the results of an experiment demonstrating the improvement which can be achieved when treating a lubricating oil containing vacuum resid as a dissolved contaminant with addition of sub-micron carbon particles followed by separation in a separator employing charge injection;

Figure 17 is a graph, relevant to embodiments employing porous beads, showing the variation of relative separation efficiency for materials of different absorptivity;

Figure 18, which again is relevant to embodiments employing porous beads, indicates how separation efficiency varies with time; and

Figure 19 presents experimental data showing the benefit of using charge injection for removing wax crystals from lube oil.

In the drawings, the same references are used to denote the same or corresponding elements.

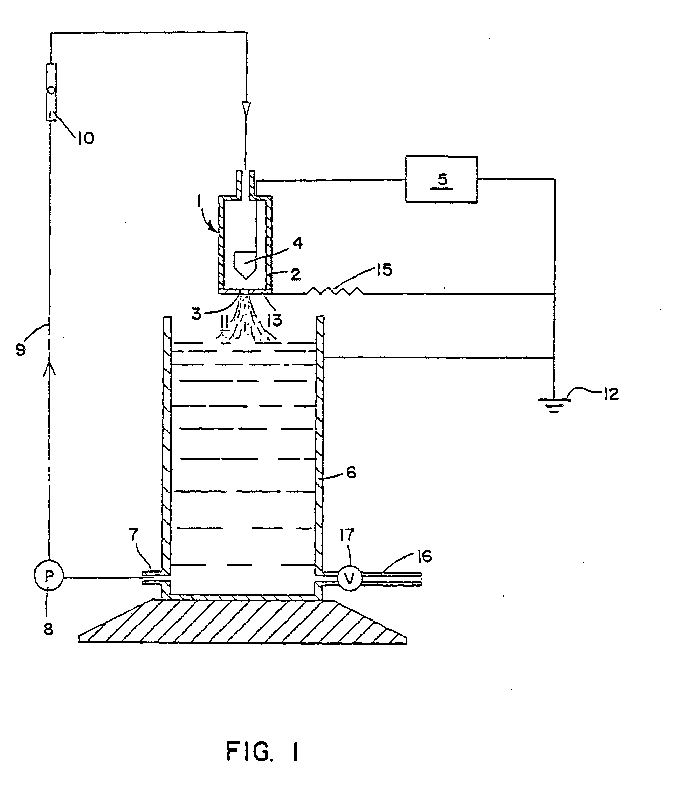

Referring to Figure 1, there is diagrammatically illustrated one form of apparatus designed for treatment of a liquid containing solid particles (contaminant). The contaminated liquid is introduced into the inlet of a charge injector 1. Suitably, the charge injector 1 is constructed in accordance with the teaching of the aforesaid U.S. Patent 4,255,777, to which reference is made for a more complete disclosure of the construction and operation of the charge injector. However, in substance, such a charge injector, as shown, essentially comprises an upright, suitably cylindrical, chamber 2 through which the mixture passes, having a bottom wall 13 with a central opening 3, and a sharply pointed electrode 4 positioned inside the charge injector chamber and electrically connected to the high negative potential terminal of voltage power supply 5, the tip of the electrode 4 being located closely adjacent to, and in axial alignment with, the opening 3. The chamber bottom wall 13 serves as a second electrode which is maintained at a lower voltage, relative to earth, than pointed electrode 4, by means of a connection to earth 12, which can be a direct connection, or as shown, through a resistance element 15. Free excess charge is injected from the pointed tip of electrode 4, by the electrode pair 4, 13, into the mixture issuing through the opening 3 and the charged mixture is directed by the charge injector through a gas or vapor space 11 into an electrically conductive, e.g. metallic, vessel or reservoir 6 located below the charge injector 1. The stream issuing downwardly through opening 3 may break up into a spray at a short distance below the spray opening in air gap 11, depending on the charging potential of the charge injector, but the existence of a spray is not critical to the effective operation of the separation apparatus. Vessel 6 is grounded at 12, so as to complete the electrical circuit of the charge injector. The separation vessel 6 is provided, close to the bottom thereof, with an outlet pipe 16, including a valve 17, for discharging clarified continuous liquid phase from the separation vessel. As shown, a liquid outlet 7 is provided in the side wall of vessel 6 at a location well below the level of mixture in the vessel and slightly above the bottom, and this outlet is connected through pump 8 and return line 9 incorporating a flowmeter 10 back to the inlet to the charge injector 1. In this way, liquid is continuously recycled around the liquid circuit and a constant level is maintained in the vessel 6. It is to be noted that because of the very large cross-sectional area of the interior of vessel 6 as compared with that of the stream of charged phase mixture emerging through orifice 3, the stream velocity through the charge injector 1 is relatively high, so as to ensure adequate level of charge injection, whereas the downward velocity of the body of liquid in vessel 6 is very small (i.e., the body of liquid has a long residence time in vessel 6), so that the migrating contaminant has adequate time to reach the vessel wall surfaces.

In operation, with valve 17 closed, vessel 6 containing a quantity of contaminated liquid and pump 9 running, excess charge carriers of one polarity are induced at or near the sharply pointed end of electrode 4 when this electrode is maintained at a sufficiently high negative potential with respect to bottom wall electrode 13. The charge carriers are then swept from the pointed tip of electrode 4 by the cross flow of contaminated liquid to be clarified issuing through the orifice 3. It is to be noted, however, that the negative potential applied to the pointed electrode is below the critical value at which ionic dissociation of the body of liquid would take place. The charge carriers in the body of liquid in the separation vessel 6 undergo volumetric distribution in the liquid phase until they encounter the dispersed contaminant particles which thereby become charged and cause an electric field to be induced in the body of liquid. The induced electric field interacts with the charge on the dispersed particles to cause migration of the solid contaminant phase to take place within the mixture in vessel 6 towards the walls of the vessel. The contaminant particles are then deposited on the wall surfaces. When the treatment has been completed, valve 17 is opened to empty the clarified liquid from vessel 6, and then a fresh sample can be introduced into the separation vessel for treatment, after closing valve 17.

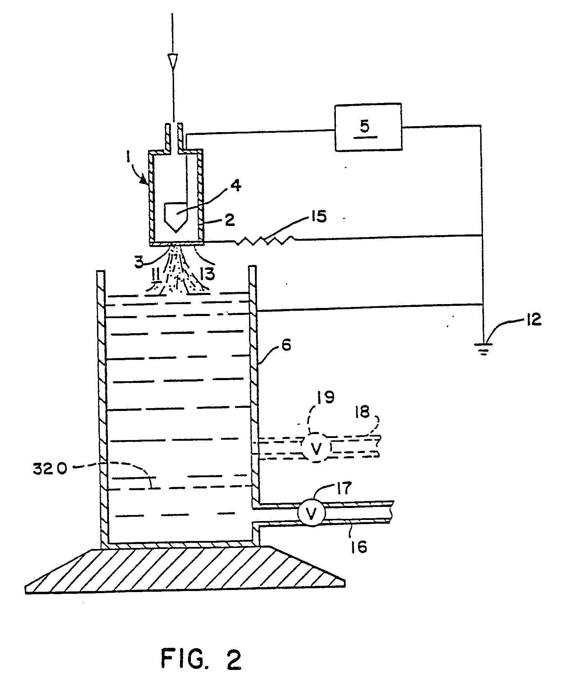

Figure 2 represents another form of batch treater. During treatment valve 17 is closed. Starting from an empty separation vessel, the level of the body of a liquid in the vessel 6 gradually rises due to the charged liquid issuing into the separation vessel from the charge injector, until the vessel is practically full. Valve 17 is opened to at least partially empty the vessel, the valve then closed, and the next sample for treatment introduced through the charge injector.

Figure 2 indicates a modification for use with a contaminant that is a liquid in dispersed (droplet) form, where the density of the contaminant phase is greater than that of the background phase. In this case, the body of liquid in the separation vessel will separate into three layers, namely a phase mixture layer in the upper region, and the separated phases below with the lighter phase above the heavier phase. There may be no clear line of demarcation between the layers of con- taminanted and clarified liquids and the layers may overlap, for example, when clarifying a water-in-oil emulsion. In this case the water droplets collected on the walls of the container vessel may migrate vertically downward towards the bottom of the vessel either by forming a continuous or discontinuous water film or by individual droplets under the influence of gravity. The water on the bottom of the collector vessel may form a second distinct continuous phase or form a layer of clustered droplets. A second outlet pipe 18, incorporating valve 19, is provided at a location in the vessel wall above the interface 320 between the clarified and contaminant phases. In this way these phases can be selectively discharged from the separation vessel.

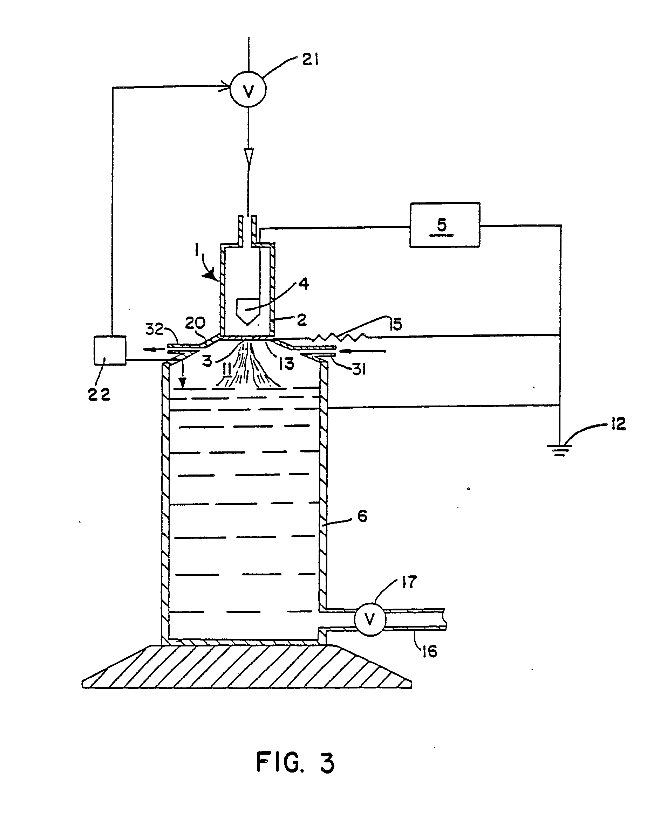

Figure 3 shows another form of apparatus, which is for continuous treatment. Here the valve 17 is set so as to allow a particular flow rate through it and a flow regulating valve 21 in the inlet line to the charge injector 1 is controlled automatically by level sensor 22 so as to maintain the body of liquid in separation vessel 6 substantially at a predetermined level.

Another modification of the apparatus of Figure 1 is shown in Figure 3. In this modification, the charge injector body is supported on an insulated frusto-conical cap 20 on top of the separation vessel 6 which encloses the gas space 11. Inlet and outlet pipes 31, 32 in the cap can be used for circulating a purge gas through gas space 11 for avoiding any risk of explosion or chemical reaction or humidity-dependent results, all of which might otherwise present a problem in the case of certain liquids to be clarified. However, for appropriate contaminated liquids, an air gap separating the body of charged liquid in the separation vessel from the charge injector result in perfectly satisfactory operation. It is stressed, however, that in all cases, the air, gas or vapor gap is important for ensuring high levels of free charge in the liquid in the separation vessel (and thereby high separation effectiveness), by eliminating or reducing significantly charge dissipation from the liquid in the separation vessel back to the electrode 13 of the charge injector 1.

In another development of the Figure 3 arrangement, the enclosed gas space 11 is pressurized from a source of compressed air for example, to increase the throughput rate in the separation vessel which is important where the background fluid is a relatively highly viscous liquid.

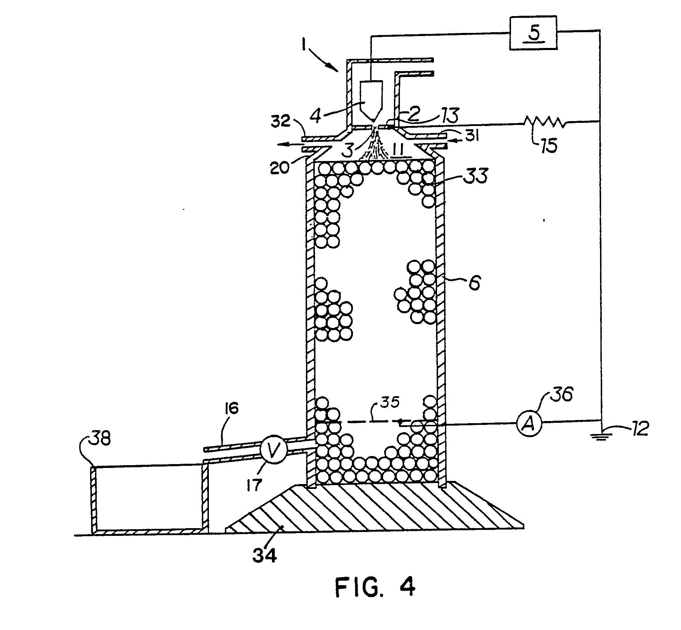

Reference is now directed to Figure 4, which shows another form of apparatus which, in this case, has been used for treating oil contaminated with dispersed solid particles such as carbon black. The main distinction over the embodiments of Figure 1 to 3 is that separation vessel 6 contains a bed of densely-spaced beads 33 which fill substantially the entire inside space of vessel 6 which conveniently is an upright, preferably cylindrical, glass columnar vessel supported on a base stand 34. A metal screen or gauze 35 to which a wire is attached and grounded through an ammeter 36 collects the charge carried by the oily liquid in the separation vessel. The screen 35 is shown with beads 33 above and below it, but instead the screen could serve as a supporting screen with the beads positioned on top of it only. Ammeter 36 provides a measure of the charge level and, with the oil flow rate, the charge density which is useful in determining the operating parameters of the charge injector. Outlet pipe 16 is directed at a shallow angle below the horizontal and discharges into a collector vessel 38 for clarified oil.

In operation, with valve 17 closed and already clarified white oil covering the beads 33, excess charge of one polarity is injected by the charge injector 1 into the stream of contaminated white oil. The charged oil flows over the bed of beads 33 and charged white oil already in vessel 6. Preferably, as shown, the level of white oil in vessel 6 just covers the top layer of beads, in order to keep the migration path length from the top surface of the white oil to the nearest glass beads to a minimum, but this is not essential. Migration of the contaminants such as carbon black particles in this example then occurs within the white oil towards the inside wall surfaces of the vessel 6, but the migrating particles encounter the outer surfaces of the beads generally before reaching the vessel wall surfaces and so become deposited principally on the beads. The clarity of the white oil increases towards the bottom of vessel 6, and clarified oil is removed through outlet pipe 16 by opening valve 17. The clarified oil can be periodically tapped off, while ensuring that the oil level in separation vessel 6 never reaches the charge injector, or preferably is continuously run off at a rate controlled by the setting of valve 17 and the feed of contaminated oil to the charge injector regulated manually or automatically to maintain the oil level just covering the beads, automatic regulation being achieved for example by means of the level control arrangement described with reference to Figure 3 above. From time to time, it may be necessary to replace beads 33 with new ones or to remove the solid beads, clean them and then re-introduce them into vessel 6.

The apparatus of Figure 4 can also be used for separating a dissolved contaminant in a liquid phase as will now be described. An example is a stock solution of vacuum resid in a lubricating oil. In the first step, a small quantity (typically in the range 0.01 to 10% by weight) of finely divided particulate matter is added to a quantity of the contaminated liquid phase and the two are then intimately mixed to form a mixture. The particulate matter is chosen so that it will act as a sorbent, and is preferably an adsorbent, to the dissolved contaminant. In this way, the contaminant is brought out of solution and is adsorbed on the particulate matter.

The separation technique is then completed by removing the dispersion, comprising the particulate matter with adsorbed contaminant, from the background liquid phase and this is achieved using the apparatus shown in Figure 4, as described above.

It will be appreciated that the use of an additive, such as in particulate form, can also be desirable where the contaminant is a dispersed phase which will combine with the dispersed phase to produce a dispersion of which the size of the individual droplets or particles is larger than that of the dispersed phase prior to admixture with the additive.

In other embodiments similar to those of Figures 1 to 3, the beads 33 are omitted from the interior of the separation vessel 6 and so the inner wall surface areas of the vessel 6 serve as the sole collector surfaces for the migrating particulate dispersion.

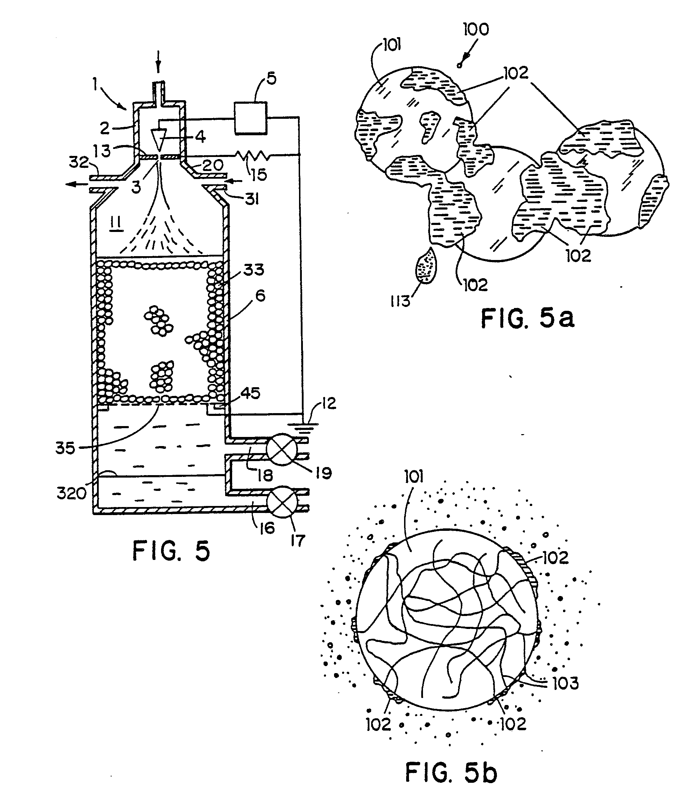

The separation apparatus of Figure 4 is especially effective where the dispersed phase is in particulate form. It will also in many cases operate effectively where the dispersed phase is a liquid. However, for dispersed phase liquids, e.g., water droplets coalescing on glass beads, the growing droplets can in some instances become detached from the beads and re-enter the continuous liquid phase bulk before the droplets have grown to a sufficiently large size such that, after re-introduction into the continuous liquid phase bulk, they can be separated out, e.g., by gravity settling, to form a continuous layer. Therefore, some of the forming droplets on the surfaces of the beads may be re-introduced in emulsion form, and water separation on an appreciable scale may not be achievable. Reference is now directed to Figure 5 which shows another embodiment, this separation apparatus being designed especially for separation water forming an emulsion in a continuous oil phase. For the purpose of illustration, the following description refers to liquid contaminants having a higher density than the continuous liquid phase, such as water droplets in a lube oil, but this is not to be regarded as limiting the invention in this respect.

The contaminant separation technique to be described involves three different stages, namely unipolar charging of the liquid contaminants, accumulation and growth of the contaminants on specially-selected porous collector surfaces across or through which the charged, contaminant-laden liquid flows, and the re-entrainment of the coalesced, larger diameter, contaminants into the liquid followed by settling or flotation.

Separation apparatus that is effective to carry out these steps is shown in Figure 5 which is in effect a hybrid derived from Figures 2 and 4. In this embodiment, gauze 35 is shown supported on an internal supporting shoulder 45 of the separation vessel. The gauze 35 is electrically insulated from vessel 6 and serves as the third electrode of the charge injector 1 to complete its electrical circuit. The gauze 16 supports a bed of beads 33 which in this case are made of specially selected porous material, as will be explained hereinbelow, in a central region within the vessel 6. The material of which vessel 6 is made should be chosen so as not to provide a conduction path between electrode 13 and ground. Conveniently, vessel 6 is made from plastics material.

The material of which the beads are made is chosen such that the migrating charged contaminant droplets, impinging on the beads, will adhere selectively to specific surface sites. The contaminant phase continues to accumulate and grow at these sites until gravity, buoyancy or fluid flow causes the contaminant phase to re-enter the liquid, but now as considerably larger droplets. Thus, referring to Figure 5a, there is shown a micron or sub-micron sized contaminant droplet 100 approaching the surface of one of the closely packed beads 101 in the separation vessel 6, on which beads several islands 102 of contaminants are growing. Agglomeration and coalescence continues for each island of water until, as shown for one 102 of the islands, a part of it is re-entrained back into or re-enters the liquid mixture, but it now has the form of a much larger droplet 113 than the original migrating droplet 100.

The third step involved the settling (or flotation, depending upon the density of the contaminant phase relative to that of the background liquid phase) of the re-entrained liquid contaminants to form a distinct continuous background phase (oil phase) which may be easily separated off *via* oil outlet 18. The contaminant continuous phase (water) can be removed through outlet 16.

As already indicated, the charged body of liquid in the separation vessel ideally should just cover the beads 101, in order that all the beads can be utilized in the separation process. The level of the charged liquid in the separation vessel can be maintained, normally by operating valves 17, 19 periodically or automatically, using a controller to operate the valves, itself responsive to a level detector (not shown) in the separation vessel 6.

The material upon which the surface coalescence occurs must satisfy several criteria. The surface density of sites upon which the contaminant water droplets can adhere must be sufficiently high to permit the accumulation and growth of the liquid contaminants to a size where they will settle when returned to the liquid mixture.

In the case that the contaminant droplets are conductive, such as water, the material should exhibit surface sites which are clustered, separated by inactive contaminant-repelling sites, so that the contaminants accumulate as discontinuous patches or islands 102 as shown in Figure 1a. This will prevent the electric space-charged fields, which drive the contaminants droplets to the surface and provide the charge enhancement, from being shorted out by the conductive paths provided by the growing areas of coalescing contaminant droplets.

Additionally, the material needs to provide steady-state maintenance of the discontinuous islands, films or contaminants. In the case of water droplets in oil, for example, pre-wetting a non-porous collector surface is generally not viable since the predominant oil phase will eventually displace the initially prepared water film and eliminates the continuous accessabilty of hydrophilic islands necessary for the surface coalescence process to proceed on a continuous basis.

In order to maintain such active islands of water, these surface sites need to be permanently wetted. It has been found that this result can be achieved when the material on which contaminant agglomeration and coalescence occurs is porous. Figure 5b illustrates how the sites where the pores 103 meet the outer surface of each bead 101 promote or support growth of islands 102 of water. The pores inside of the bead become saturated with water and thereby act as reservoirs to maintain the surface sites wetted.

Materials which have been found to satisfy these criteria are those which have adsorption capacities for water ranging from about 0.1 to about 10% by weight. These materials would be expected to exhibit both hydrophillic surface sites as well as a somewhat porous structure which enables transfer of water from the bulk of the material to the active surface sites. Thus, the porous region within the beads acts as a kind of reservoir which keeps the surface pore sites wetted to promote growth of islands of water. Materials with adsorption capacity up to about 10% by weight are not expected to provide continuous conductive paths along the surface or through the bulk of the material such as would reduce the effectiveness of the water separation technique. Materials with higher adsorptivities of up to about 40% by weight can be expected to give satisfactory performance.

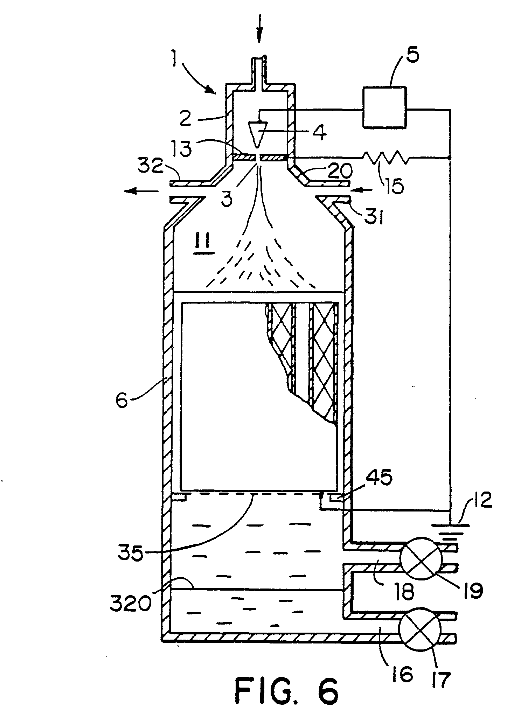

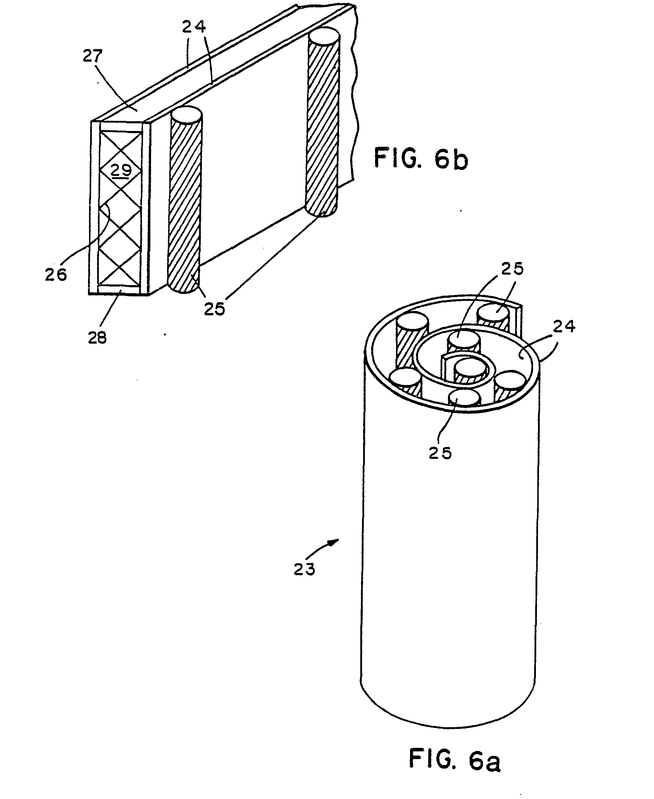

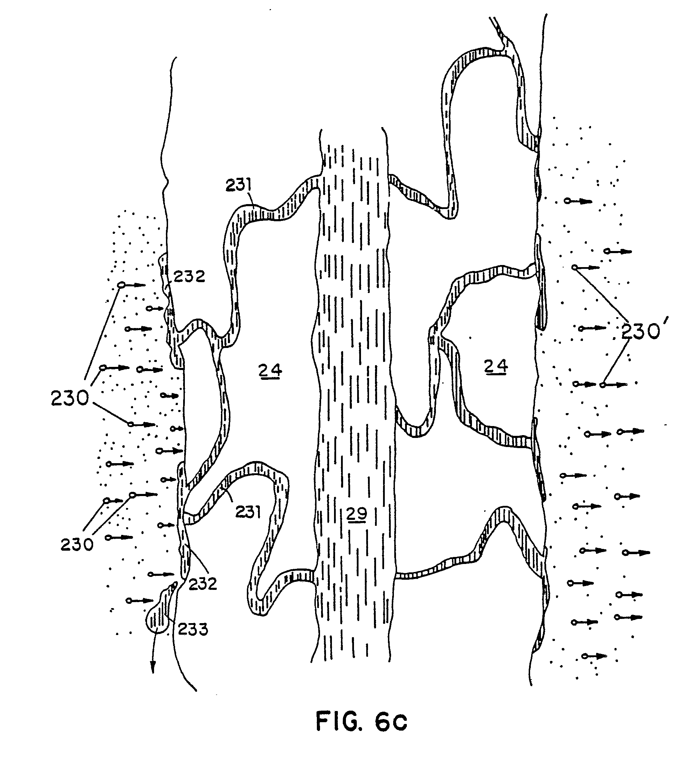

Reference is now directed to a further embodiment illustrated in Figures 6 and 6a—6c. In Figure 6, the same reference numerals as used in Figure 5 denote the same or corresponding parts. The difference resides in the use of a porous membrane structure 23 in place of the densely packed beads. This membrane structure is cylindrical in configuration and located within vessel 6 resting on gauze 35 so as to be located coaxially with the cylindrical vessel. The membrane structure 23 as shown in Figure 6a comprises a porous membrane assembly of two, initially flat, rectangular membranes 24 spaced apart from one another and in face-to-face array, which is rolled up, with successively overlapping turns mutually separated by means of rigid spacer elements 25 to form the cylindrical membrane structure shown in Figure 6a. Figure 6b shows a detail of the membrane assembly with the cylindrically curved membranes 24 flattened out for clarity. The rectangular membranes 24, suitably consisting of cellulose acetate sheet, are held spaced-apart by a spacer and support arrangement, very diagrammatically shown at 26, which can be a fibre-glass screen. The top and bottom edge pairs of the two membranes 24 are sealed off as shown diagrammatically at 27, 28, respectively, by adhesive or heat fusion. In this way a closed reservoir 29 is defined between the membranes 24. The spacers 25 are suitably made of plastics material.

Figure 6c, which is an enlarged view showing a vertical section through the membrane assembly of Figure 6b with the thickness of each membrane 24 enlarged for clarity of illustration, shows outer membrane surfaces exposed to the bulk liquid mixture, containing droplets 230 of contaminant migrating, generally in the radial direction, and encountering the exposed surface of one membrane 24. The channels provided in the membrane due to its porosity are indicated at 231. It can be seen that at the surface sites where the channels 231 intersect the exposed membrane surface, islands 232 of contaminant form and grow until considerably larger drops 233 of contaminant break away and separate-out (or float) to form a discrete layer of contaminant. The suspended droplets 230' beyond the exposed surface of the other membrane 24 will, in fact, in the main migrate in the same direction as droplets 230, i.e., away from that other membrane 24, but they will encounter the inner exposed mebrane surface of the next turn of the membrane assembly.

In a simpler arrangement (not shown, but whose construction is readily apparent from Figures 6 and 6a to 6c), a single rectangular membrane 24 is progressively wound up into a spiral configuration with periodic insertion of spacers 25 between successive turns of the spiral membrane assembly as the spiral winding proceeds. In this embodiment, the interior reservoir 29 within membrane structure 23 is absent. In operation, the pores of the membrane become wetted with the contaminant liquid which promotes growth of islands of contaminant at the surface sites of the membrane pores.

In some instances, it is conceivable that with contaminant droplets of high conductivity, arcing might occur in the charge injector. Another possibility is contaminant deposits may tend to build up in the charge injector leading to reduced charge injector efficiency and/or blockages. These problems can be overcome in a modified arrangement (not illustrated) in which the contaminated liquid is introduced directly in the separation vessel and the charge injector is used instead to inject charge into a substantially contaminant-free stream of preferably the same or alternatively a different liquid and issue the charged stream into the separation vessel in which the contaminated and charged liquids mix and charge transfers to the contaminant dispersion, to bring about contaminant migration and conglomeration as described above.

One area of particular interest so far as the present invention is concerned is the separation of wax and water from lubricating oil. The embodiment of Figure 4 is suitable for separating wax from lube oil. Where the waxy lubricating oil to be treated contains wax in the form of wax particles (or crystals), the wax particles become deposited on the bead surfaces, in the manner described above with reference to Figure 4. However, it is to be noted that if the oil to be treated is initially at an elevated temperature such that a proportion or the whole of its wax content is in the form of dissolved wax, then the oil, preferably diluted with oil solvent, firstly needs to be cooled down sufficiently to precipitate the wax, and then it can be fed along the supply line to the charge injector. In this case, the wax-containing oil feed will include oil solvent which will be passed through the charge injector and separation vessel, and then discharged, together with the clarified oil, through outlet pipe 37. A solvent recovery unit (not shown) can be used for recovering the oil solvent from the clarified oil, in which case outlet pipe 16 would lead to the solvent recovery unit. Solvent recovery units are well-known in the art and need not be further described herein. Where a vaporizable oil solvent such as liquified propane is used, such that the vaporizing solvent will extract heat from the oil and thereby promote precipitation of dissolved wax, propane vapor will fill enclosed space 11 in which case only a single pipe 32 is required which serves as a vent for propane vapor or which leads to a propane recovery unit.

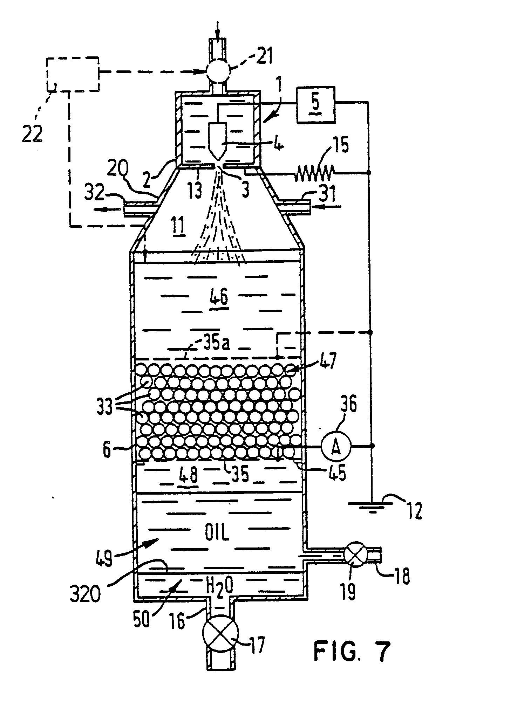

A similar separation apparatus, adapted for dewatering or dehazing lubricating oil, is depicted with reference to Figure 7. Its construction is similar to that of Figure 5, except that the beads do not occupy the whole of the internal space within separation vessel 6 above gauze 35, but instead occupy only a proportion of that space so as to leave an upper section 46, which is devoid of any beads (or other collector surfaces) within the volume of this section 46. Thus, the vessel interior is divided, working from the top downwards, into an uppermost section 46 which is free of any collector surfaces apart from the internal wall surface regions of vessel 6 and which constitutes a primary conglomerating or coalescence region, a section 47 which is occupied by the beads 33 and which serves as a secondary conglomerating or coalescence region, and separation region 48 in which a mixture of oil and coalescing water droplets breaks up into a charged water-in-oil layer, an oil layer 49 and a water layer 50. The smallest dimension of the uppermost section of 46 should preferably be at least 100 times greater than the initial average distance between individual water droplets and also as between any individual wax particles that may be present.

It is noted that if there were no primary coalescing region provided by section 46 devoid of any beads, separation of the water and any wax might not in every case be wholly effective with very small droplet and wax particle sizes, but this drawback is overcome in the present embodiment because the primary coalescing region 46 allows the droplets and wax particles to coalesce and grow to a sufficient size that effective separation can occur in the bead separation region. On the other hand, the primary coalescing region 46 is not essential in every embodiment, especially where comparatively large water droplets and wax particles are present or even for smaller contaminant sizes, where the resulting concentration of comparatively small water droplets or dissolved wax and minute wax particles in the discharged clarified oil is acceptably low.

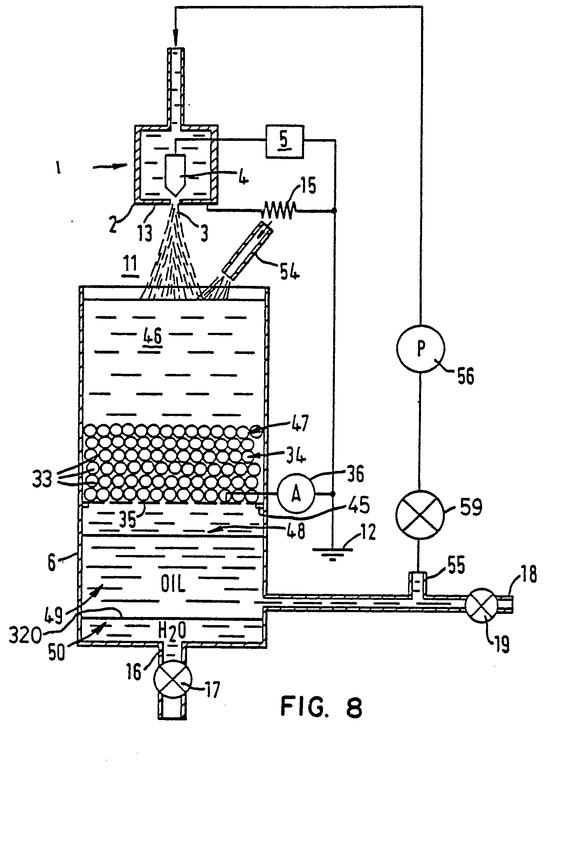

The only other difference over Figure 5 which requires any mention is that an alternative location for the gauze electrode 35 is when it covers the beads 33, as shown at 35a in Figure 8. In this arrangement, other means for supporting the bed of collector beads 33 would need to be provided.

In operation, with valves 17 and 19 set to determine flow rates for water and clarified oil which match the flow rate through charge injector 1, or by selective opening and closing valves 17, 19 so as to maintain the liquid mass in vessel 6 at an approximately constant level close to the top of the separation vessel, excess charge carriers are induced to be emitted from the sharply pointed end of electrode 4 when this electrode is maintained at a sufficiently high negative potential with respect to spray opening 3. The charge carriers are then swept from the pointed electrode 4 by the crossflow of the water-in-oil emulsion or hazy oil to be clarified issuing through the orifice 3. Within upper region 46, the major portion of the injected charge has transferred to the water droplets and any wax particles, so as to drive the water droplets and wax particles towards the bounding wall surfaces of separation vessel 6. The internal dimensions of separation vessel in region 46 are preferably chosen to be much larger (typically 100 times or more) than the mean interdroplets and inter-particle spacing within the continuous oil phase. In this way some degree of coalescence of the migrating water droplets and of the wax particles will occur within region 46 before the droplets and particles reach the internal wall surfaces of the separation vessel, and larger water droplets and wax particles are thus formed. Other migrating droplets and particles will reach the inner wall surfaces of the separation vessel and coalesce there, to form larger water droplets and wax particles. The water droplets may break away from the wall surfaces, or a surface water film may be formed on the separation vessel wall to promote settling of the water. The wax particles formed adjacent to the wall surfaces will in the main become attached to the wall surfaces. The larger water droplets as formed in both ways start to settle, due to the effects of gravity and downward settling being superimposed on the droplet migration in the generally radial direction, and these water droplets, together with any wax particles coalescing in the oil in region 46, accordingly encounter the collector beads 33 in section 47, on whose exposed surfaces the droplets coalesce further, until they become detached from the bead surfaces and separate out to form the bottom, water layer 50. The wax particles, however, become attached to the bead surfaces and continue to deposit there.

It will be appreciated that the close packing of the beads provides very short migration paths for the water droplets and wax particles to enhance the dewatering/dehazing. The oil from which the water droplets and wax have been removed tends to separate out into oil layer 49 floating on top of water layer 50, water-in-oil emulsion or hazy oil occupying the remainder of the volume taken up by the liquid mass in vessel 6 and which fills section 46, the interstices between the beads, and water/oil layer 48. Where valves 17, 19 are set to define predetermined flow discharge rates for the clarified water and oil phases, an optional level control arrangement can be used to keep the level of charged water-in-oil emulsion or hazy oil in section 46 substantially constant, this arrangement being of the construction described with reference to Figure 3.

The apparatus depicted in Figure 7 will generally operate satisfactorily for water-in-oil emulsions. However, in the case of waxy oil, there may in certain circumstances be a likelihood of wax depositing and building-up with time in the region of opening 3, thus unfavourably affecting the charging efficiency of the charge injector and resulting in partial or complete blockage ultimately. The embodiment shown in Figure 8 is designed to overcome these shortcomings. Here, the wax contaminated oil is kept separate from the charge injector and passed along a delivery pipe 54 from which it is discharged through air gap 11 into upper section 46 of separation vessel 6. Here the air gap is shown in open communication with the surrounding atmosphere. Suitable support means for supporting the charge injector 1 above the separation vessel 6 is not shown but can comprise a frustro-conical cap, as in Figure 7. A line 55, including pump 56 and control valve 59, branches out from outlet pipe 18 upstream of valve 19 and leads back to the inlet of charge injector 1. Therefore, the oil into which charge is injected is substantially free of wax. In this way the above-mentioned problem of depositing wax is overcome. The charged contaminant-free oil issuing from charge injector 1 and the uncharged wax and water-laden oil discharged from delivery pipe 54 are brought into contact with one another in upper section 46 of the separation vessel and mix there. Charge transfers in this region to the hazy or waxy oil. In all other respects, the operation of this modified separation apparatus is the same as in the Figure 7 embodiment. As before, a level control arrangement can optionally be employed.

In the Figures 7 and 8 embodiments, as already mentioned, it is not essential that there be a primary coalescing region 46. This region allows some coalescence and growth of wax particles and/or water droplets to occur, which is beneficial as a preliminary to the further coalescence occurring in the bed region 47, especially for very small initial droplet and particle sizes. However, the beads can occupy not only the bead region 47 but also the primary coalescing region 46 and this arrangement will result in adequate separation effectiveness in many practical applications.

In addition, it is again possible to add liquid propane or other oil solvent to the feed, where the feed contains dissolved wax, and then to cool the solvent/oil to precipitate dissolved wax, before introducing the feed into the charge injector. It is also to be noted that in each of Figures 4, 6 and 7, where an oil solvent is used in solvent/lube oil dewaxing, it could in a modification be introduced directly into the separation vessel 6 instead of into the chilled oil feed to the charge injector. Another possibility is to inject charge into the oil solvent, and then introduce the charged oil solvent into the oil feed which can then be directed by a nozzle for example into the separation vessel. Alternatively the charged oil solvent and oil feed could be separately introduced into the separation vessel. In both cases, the advantage is achieved that charge is injected into the oil solvent as opposed to the wax-laden oil which avoids the problem which can otherwise occur in some circumstances where wax deposits build up in the charge injector, particularly in the charge injection region, and this can effect the charging performance or efficiency.

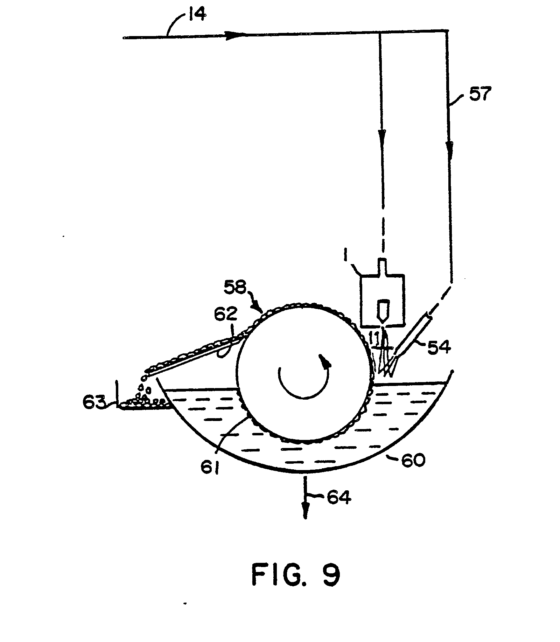

Referring now to Figure 9, there is diagrammatically illustrated an apparatus that is especially designed for separating wax from wax-laden lubricating oil. The oil may have been previously partially dewaxed and may contain propane or other oil solvent, but in this example, the wax particle laden lube oil contains no oil solvent. Typically, the oil may contain 0.01% to 30% wax. Line 14 conveys the oil feed to charge injector 1 which is of the same construction as the charge injector 1 of the preceding embodiments.

Positioned below the charge injector is a drum separator 58 which comprises a part-cylindrical trough 60, into which the charged waxy oil slurry from the charge injector is discharged, through a gas or vapor space 11, and a rotary wax collector drum 61 which is arranged inside the trough, coaxially thereto, leaving a comparatively small radial gap between the drum surface and the inside, part-cylindrical surface of the trough. The drum surface is made of electrically conductive or non-conductive material (e.g., metal, glass or other solid material) and serves as a collector surface for wax. The gas or vapor space 11 provides the same function as the gas or vapor space 11 in the preceding embodiments and similar comments to those made hereinabove in connection with those embodiments will equally apply in the present constructional example. However, it is remarked that it is preferred for the enclosure required not only to enclose space 11 but also to enshroud the entire exposed portion of the drum 61 above the level of the oil/propane slurry in the trough 60.

It will be noted that in the illustrated embodiment a bypass line 57 diverts a proportion of the uncharged waxy oil slurry away from the charge injector and introduces the diverted proportion directly, through delivery pipe 54 and gas or vapor space 11, into the trough 60 where the uncharged slurry mixes with the charged slurry so that the charge becomes uniformly distributed on the wax particles in the slurry in the separator trough. The reason for this arrangement is that there is a practical limitation on the throughput which any given charge injector can handle and in order to achieve large scale dewaxing without for example having to use several charge injectors connected in parallel, the bypass line arrangement shown in Figure 9 is advantageous.

In operation, wax-laden oil to be treated is fed along line 14, and then divided into two streams, one of which passed through charge injector 1 and the other flows along bypass line 57. The charged and uncharged slurries are directed through gas or vapor space 11, into the trough 60 of drum separator 58. The collector drum 61 is rotated in the direction indicated by the arrow. The electrophoretic force which is set up in the waxy oil slurry in the radial gap between trough 60 and drum 61 causes wax particles to migrate to the drum surface and become attached thereto by electrical attraction and physical adhesion. In this way, wax collecting on the drum surface is carried upwardly by the rotating drum out of the charged slurry in the trough and conveyed to a location at which a scraper blade 62, positioned immediately adjacent the drum surface, acts to mechanically scrape the wax off the drum surface. The wax removed in this way is collected in any convenient way such as by a wax conveyor. For simplicity in Figure 9, however, a wax receptacle 63 is shown which is periodically emptied. The relatively clean drum surface remaining after the wax has been scraped off then re-enters the charged slurry in the trough 60, with further rotation of drum 61, and then further wax starts to deposit on that surface. It is to be noted that the drum only needs to rotate comparatively slowly (e.g. 0.1 to 5 r.p.m.) in order that a sufficiently thick layer of wax can be deposited before the wax layer reaches the location of the scraper blade 62. The charged slurry in the upper region contains a relatively high concentration of wax (similar to that of the charged slurry delivered by charge injector 1) whereas the oil in the lower region of the trough 60 is comparatively wax-free. This substantially wax-free oil is tapped off from the trough, periodically or continuously, along line 64.

A possible modification to the Figure 9 embodiment, particularly in regard to solvent dewaxing, is to direct uncharged solvent into the separator drum 61 of the separator 58 where the oil solvent mixes with charged chilled waxy oil, which may be diluted with oil solvent (instead of introducing the oil solvent into the uncharged waxy oil feed). Another possibility is to direct uncharged chilled waxy oil, which may be diluted with oil solvent, onto the drum 61 while simultaneously directing charged oil solvent or charged wax-free oil at the drum 61. Modifications could be effected with the Figure 8 embodiment, with the charged and uncharged streams separately directed into separation vessel 6 from above.

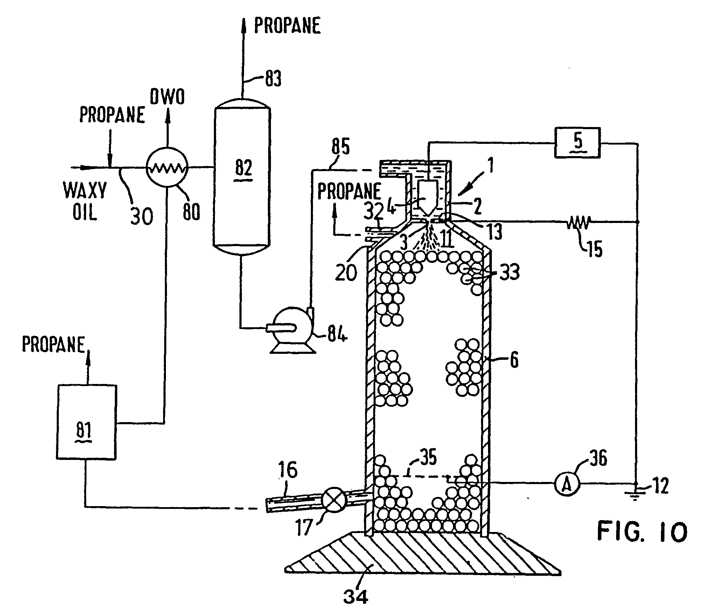

Referring to Figure 10, there is diagrammatically illustrated a modification of the Figure 4 embodiment, depicting a preferred arrangement for propane dewaxing of wax-laden lubricating oil which is introduced along line 30. The oil may have been previously partially dewaxed. The waxy oil feed to be treated typically contains dissolved wax, and also a proportion of wax particles and crystals, all of which would contribute detrimentally to the oil performance, especially under engine cold start conditions, if they were not removed.

Liquid propane at a temperature of 130°F (54.4°C)±about 70°F (38.9°C) is added to waxy oil at a temperature of 160°F (71.1°C)±about 40°F (22.2°C) in line 30, those temperature ranges being preferred in order to ensure proper mixing of the propane and waxy oil. It is to be understood, however, that the temperature ranges quoted are purely exemplary and have no limiting character. The propane acts as an oil solvent. The dilution ratio of waxy oil/propane solvent may be almost 1.0/3.0 or as required. The diluted waxy oil/propane mixture is precooled by indirect heat exchange in a precooler 80 with cold dewaxed oil (DWO) from a propane recovery unit 81 and is then flashed across a single valve in flash drum 82, where sufficient propane vaporizes to reduce the temperature of the wax-laden oil/propane slurry rather to the desired dewaxing temperature (dewaxed oil pour point minus "spread") which typically might be −30°C (−22°F). The propane vapor is separated from the slurry in flash drum 82 and leaves the drum along line 83 for recycling to compression. The cooling brought about in the precooler 80 and by the auto-refrigeration effect occurring in the flash drum 82, coupled with the lesser solubility of liquid propane to wax causes dissolved wax to solidify and crystallize and form a precipitate preferentially in the lube oil/propane solvent.

The slurry in the flash drum 82 is pumped by pump 84 from the bottom of the flash drum along line 85 which leads to the charge injector 1 followed by the separation vessel 6 in which the wax particles deposit on the beads 33. The manner in which this occurs will be evident from the description given above in connection with Figure 4 and therefore need not be further described herein. It is to be noted, however, that the propane vapor purges the vapor space 11 of air, which is desirable to avoid risk of explosion or chemical reaction. Where other oil solvent liquids are used which do not vaporize under the prevailing operating conditions, e.g., liquid hexane, preferably a purge gas such as nitrogen is circulated through the vapor space 11. This would require a second pipe to be provided extending through the wall of cap 20, so that that pipe could serve as the purge gas supply pipe and pipe 32 would be the purge gas outlet pipe. Where hexane for example is used instead of propane, flash drum 82 would be inappropriate as hexane would not have autorefrigerant properties and a high capacity refrigerator would be employed in place of precooler 80. It is also to be noted that outlet pipe 17 discharges into propane recovery unit 81. Dewaxed oil from propane recovery unit 81 is passed through precooler 80 to aid as a coolant for precooling the waxy oil/propane solvent in line 30, as described above.

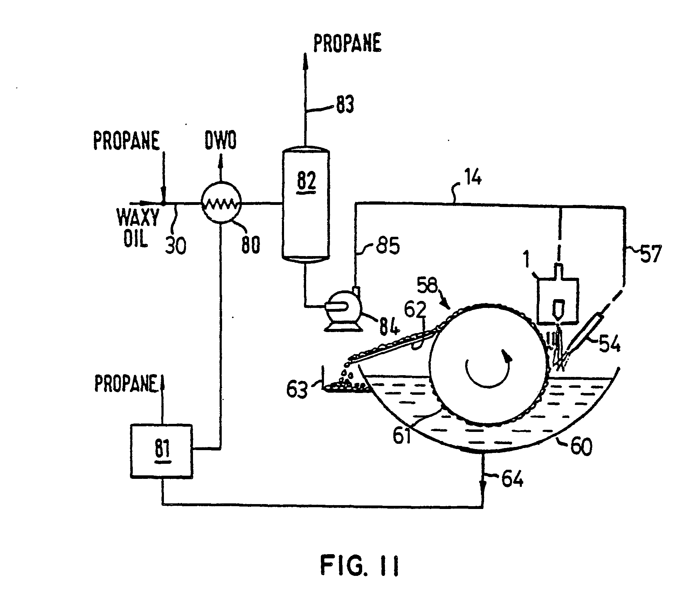

A still further embodiment, using a drum separator instead of a bead separator as in Figure 10, is depicted in Figure 11. The propane addition and cooling sections of the apparatus are the same as employed in Figure 10, whereas the drum separator is identical to that shown in Figure 9. The operation of this embodiment will therefore be apparent from the foregoing description.

The foregoing description will now be expanded by specific examples.

Example 1

An experiment was run to separate 1 µm carbon black particles from a white oil (Marcol® 87-manufactured by Exxon Company USA) using the apparatus of Figure 1. In order to show the utility of the charge injection process in bring about solid/liquid separations, a solution of 10 ppm of 1 µm carbon black particles in the white oil Marcol 87 was prepared. This oil has a viscosity of approximately 15 cp (15 mPa s) at 25°C, the ambient temperature at which the separation was run. Before charge injection was started the solution had a dark grey colour. The clarification of this solution as a function of total electrical energy injected was monitored visually. The degree of clean-up attained was confirmed by microscopic examination. After $5.9 \times 10^{-1}$ J of electrical energy was injected, the solution appeared clear. The carbon black that was in the solution had precipitated out onto the walls of the cylindrical metal vessel. A control experiment was performed in which the 10 ppm carbon black solution was subjected to the same treatment except that the charge injector was inoperative. No precipitation or clarification was observed.

Carbon black was obtained from the Elastomers Technology division of Exxon Chemical Company. A concentrated solution was prepared by adding 0.5 g of carbon black to 155 g of Marcol 87. This mixture was sheared in a Waring blender for one minute at highest speed. The resulting solution had a solids loading of 2900 ppm. 3 g of this concentrated solution was diluted to 1000 ml with Marcol 87 to produce a solution with 9.6 ppm of carbon black. This solution was used in the experimental program. When this solution was sprayed through the charge injector into the metal vessel, the carbon black particles coated out onto the walls of the can. The electrical conditions were 6000 V and 0.2 µA for seven minutes. The flow rate was approximately 1 ml/sec.

Example 2

A contaminated white oil mixture was made up from white oil (Marcol 52—manufactured by Exxon Company USA) containing 20 ppm of carbon black particles with a mean particle size of approximately one micron. A stream of this contaminated oil was pumped at a rate of 2 ml/sec, through its charge injector of an apparatus constructed substantially in accordance with Figure 4. The charge injectors operated at a potential of 6,000 volts between its pointed emitter electrode 4 and orifice electrode 13 and passing from 1 to 2 microamps of current. In this example, the glass vessel 6 had a height of 8 inches (20.3 cm) and a diameter of 2 inches (5.1 cm) and was substantially filled with 1/4 inch (0.64 cm) diameter glass beads. There was a gas space of 2 inches (5.1 cm) between the orifice electrode of the charge injector and the top of the bed of glass beads. The valve 39 was left permanently open, the beads were fully covered and when the charged stream of contaminated white oil was passed through the bed of glass beads, the carbon black was observed to precipitate out and be held strongly on the surfaces of the glass beads, to give an effluent stream, leaving the vessel 6 through outlet pipe 37 with less than 0.2 ppm of carbon black particles after one pass. The current as read on ammeter 36 divided by the flow rate resulted in a charge density during the run which exceeded 0.01 coulombs/meter$^3$. It was observed that a bed of lead shot was not as effective as a bed of glass beads. Also, it was observed that the glass beads lost some of their effectiveness after their surface was coated with the conducting carbon black particles. Glass, therefore, was a preferred material for separating out the carbon black contaminant, but the present invention is not limited solely to glass or only ceramic materials. Thus, plastics and other dielectric materials of low conductivity are also suitable for use as the beads making up the contaminant collection bed. The upper limit of conductivity that can be tolerated for the material from which the beads are made will depend upon the contaminant migration velocity (governed by the viscosity of the white oil) and the charge level achieved with the charge injector.

With apparatus identical to that described with reference to Figure 4, contaminants comprising coke fines, water droplets, wax crystals, and alumina fines with diameters ranging from 0.5—50 μm and in concentrations of less than 500 ppm were separated from white oil and white oil/heptane mixtures with separation efficiencies exceeding 95% in each case.

Example 3

A stock solution of 0.05% vacuum resid in a lubricating oil (S100N) having a viscosity of 36 cp (36 mPa s) was prepared. Various amounts (20 ppm, 40 ppm, 60 ppm) of carbon black were added to aliquots of the stock solution. These carbon black/vacuum resid/lube oil mixtures were mixed in a suitable blender and then subjected to separation treatment using apparatus similar to that shown in Figure 4 but having a liquid level control management such as incorporated in the Figure 3 embodiment.

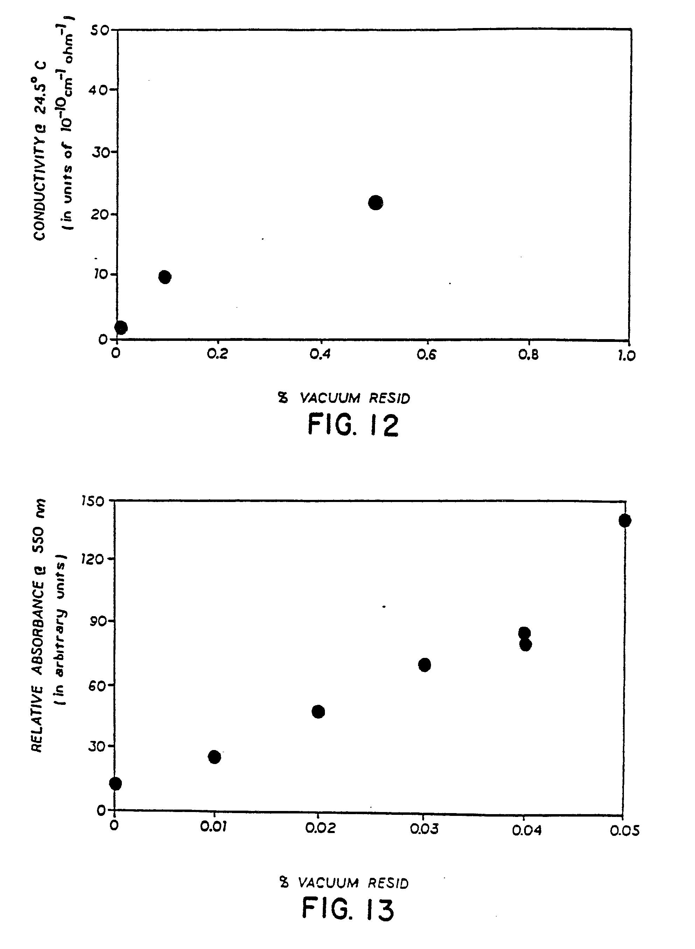

Figures 12 and 13 show the effect of vacuum resid on the conductivity (at 24.5°C) and absorbency (at 550 nm) of lube oil solutions (S100N) for differing concentrations of vacuum resid, prepared in corresponding manner to the stock solution containing 0.05% vacuum resid.

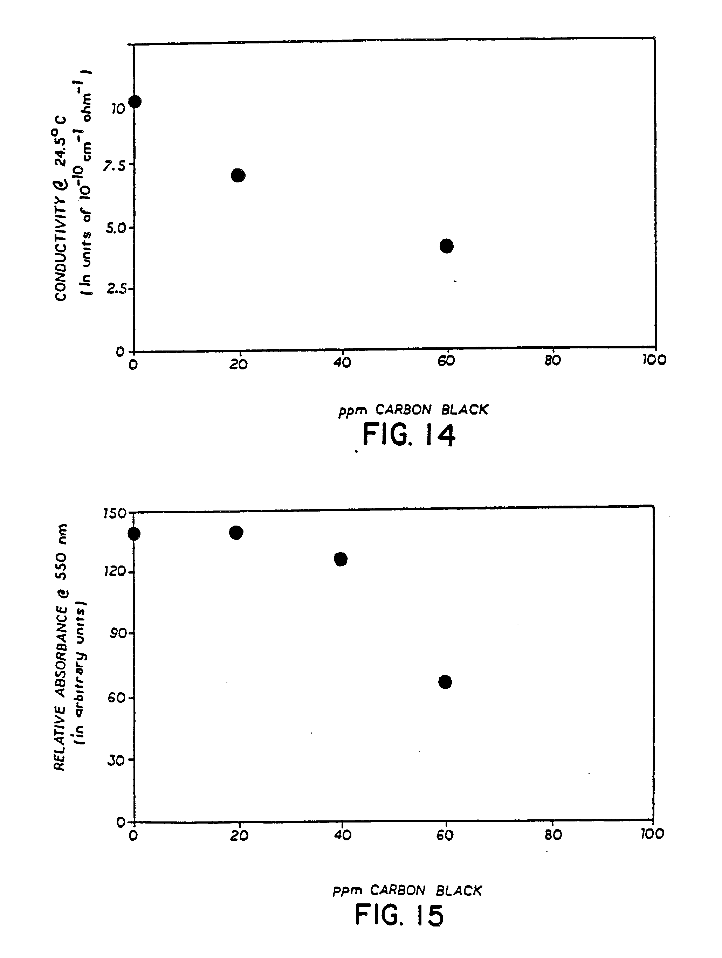

Figures 14 and 15 show that the conductivity and absorbency of the stock solution tested after treatment with carbon black and treatment in the dispersion treatment apparatus, both decreased. Thus, on the basis of conductivity and absorbence, the concentration of vacuum resid in the stock solution is decreased by at least 250 ppm with the addition of 60 ppm carbon black and exposure to the charge injection separation technique. However, no significant change in absorbency and only a small change in conductivity were observed when the same stock solution without carbon black was exposed to the same charge injection separation technique. It was therefore concluded that the carbon black combined with the vacuum resid and then the separation apparatus removed the combined carbon black/resid.

The use of carbon black in the above example is not intended to limit the finely divided solid additive to carbon black. Thus, a silica-alumina catalyst (DA-1) was also tried and shown to combine with the resid.

Example 4

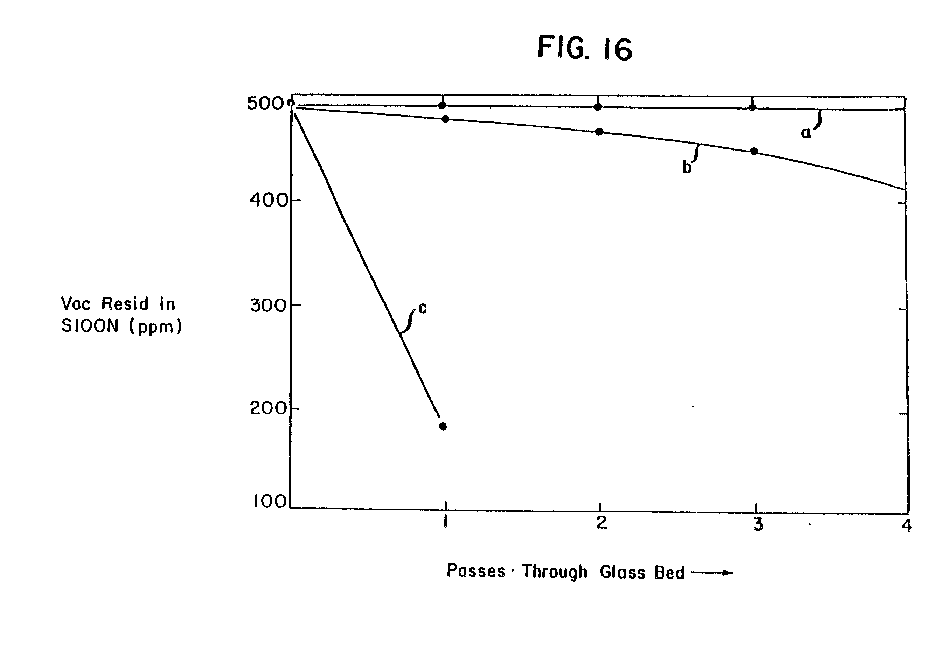

Figure 16 illustrates the results of a further set of experiments using a stock solution containing 500 ppm of vacuum resid prepared as in Example 3. After four passes through the separation apparatus and with the charge injector switched off, no measurable reduction in concentration of the vacuum resid was detected (curve a, Figure 16). With charge injection, the vacuum resid concentration was reduced to just over 400 ppm after four passes (curve b). However, after only one pass when the stock solution had been mixed with 60 ppm of submicron carbon and then passed through the separation apparatus with the charge injector operating, the concentration of vacuum resid was measured at less than 200 ppm.

It is well known to those skilled in the art that smaller adsorbent particle sizes are more effective adsorbers, but with known electrostatic separation techniques, limitations exist on removal of particles of very small size from a liquid background phase. However, the use of an additive together with the charge injection separation technique as disclosed herein enables much smaller particle sizes to be removed than with many known separation techniques and therefore more effective separation of the contaminant can be achieved because very small absorbent particle sizes can be employed.

Vacuum resid is intended to be representative of all contaminants and lube oil representative of all dielectric liquids. Moreover, it is to be understood that the separating process disclosed herein is effective to separate other contaminants, whether in solid, liquid, gaseous or gel form, from continuous background liquid phases.

Example 5

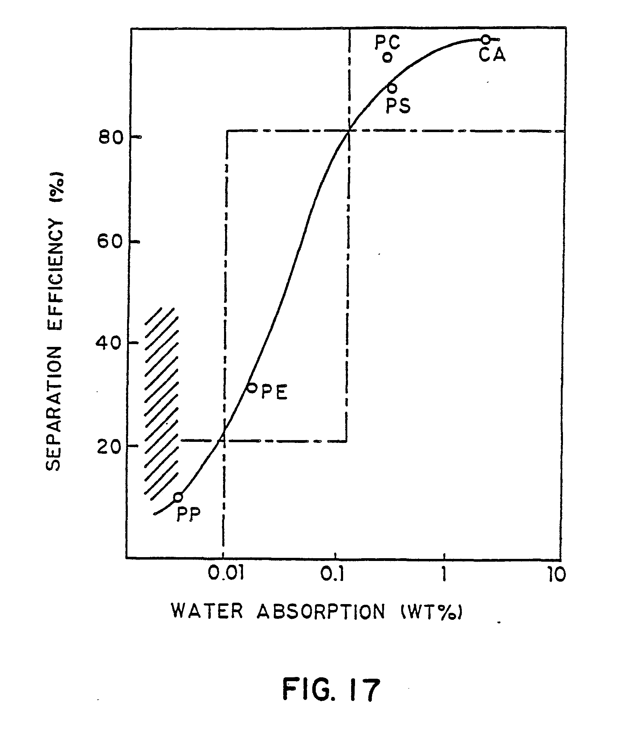

Tests for selecting materials suitable for use in the Figures 5 and 6 embodiments were carried out for a water dispersion in the concentration range of 0.1 to 1.0% in a dewaxed lube oil with a viscosity of approximately 255 cp (255 mPa s), to be designated as S600N oil. Figure 17 shows the result of the separation efficiency measured for a variety of materials with different capacity for water absorption, PP, PE, PC, PS and CA representing, respectively, the separation efficiencies of polypropylene, polyethylene, polycarbonate, polystyrene and cellulose acetate. The shaded region represents the spread of data obtained for various glass samples. Porous glass, commonly called silica gel, however, performs as well as cellulose acetate. Results confirm that a high separation efficiency is obtained for materials with an absorption capacity of between about 0.1 and about 10% and considerably poorer separation efficiency below this range. Better results overall were observed within the range 1 to 10%, more preferably 2 to 10%. Therefore, polycarbonate, polystyrene and cellulose acetate are suitable materials for the collector material whereas non-porous glass, polypropylene and polyethylene, which all gave a separation efficiency of below 50%, are not suitable when porous property, described with references to Figures 5 and 6, is to be utilized.

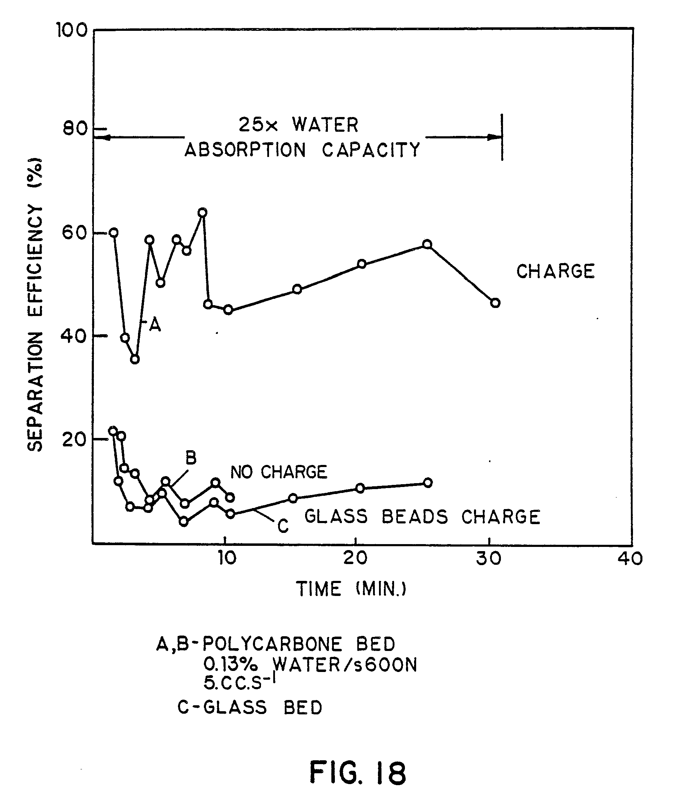

To demonstrate the concept and emphasize that the process is, in steady state, a surface coalescence process rather than bulk absorption into the porous material, tests were run with a 0.15% dispersion of water in the aforementioned S600N oil through a bed of polycarbonate beads at a flow rate of $5 \, cm^3 \cdot s^{-1}$. The results are shown in Figure 18. The curves A and B were obtained when charge is and is not injected respectively, into the water-laden stream. The enhancement in the separation efficiency by a factor of five due to the unipolar charging of the fluid can be seen. In addition, the enhancement due to the selection of appropriate materials can be seen from curves A and C. Curve C is the result of using glass beads. Finally, the results shown in Figure 18 also confirm that surface coalescence is a continuous process rather than a transient bulk absorption by the polycarbonate. This can be seen from the fact that during the 30 min. run, a relatively steady-state constant separation efficiency was maintained even though 25 times the amount of water needed to saturate the absorption capacity of the polycarbonate beads was passed through the bed.

It is to be noted that the porous beads did not have to be specially wetted before use. It was found that the moisture existing naturally within the pores in ordinary room conditions was adequate to promote the growth and coalescence of the contaminant phase.

Example 6

An experiment was run using micron-size water droplets dispersed in a variety of lube base stocks and paraffinic white oils. The experimental apparatus was as shown in Figures 7 and 8. In both cases, charge was injected and charge transfer and droplet coalescence occurred in the upper or coalescence section of the separation vessel. The emulsion now containing larger water droplets was passed through the bed of packed glass beads. As the charged emulsion passed through the bed, large water droplets settled out on the bead surfaces. Some of the water adhered to the bead surfaces while the remainder drained off into the emulsion where it settled into a water layer at the bottom of the separation vessel.

The water was introduced into the oils by either contacting the oil with steam or by subjecting the oil and added water to a high velocity shear. The resulting water-in-oil emulsion was allowed to settle for 12 hours and a sample decanted from the top of the separation vessel. The water content was measured before and after the experiment using a variant of a Karl Fischer titration technique. The average size of the water droplets was of the order of 2 μm in diameter as determined by optical microscopy. Injected charge densities of $\sim 0.2 \, Cm^{-3}$ were employed and flow rates of $12 \, cm^3 \, s^{-1}$ were maintained through the charge injector. The power dissipated was $\sim 50$ mw during the run. The sample size was 1 liter and the flow rates through the packed beads comprising 0.4 cm beads varied with the sample concerned but was no greater than $10 \, cm^3 \, s^{-1}$. The bed height was 12 cm and diameter was 8 cm. Passing the emulsion through the apparatus without charge injection resulted in removal of some of the water ($\sim 50\%$). This number varied considerably. However, when the charge injector was switched on, the results set out below were obtained. The results listed in the table are the best results of a series of experiments and show the effectiveness of the separation technique.

## TABLE
Best results of charged fluid coalescence tests
Coalescence tests for several viscous
oils with added dispersed water

| Feed | Viscosity @20°C (cp or mPa s) | Excess H$_2$O (ppm) | |
|---|---|---|---|
| | | In | Out |
| Marcol® 52 (white oil) | 11 | 820 | 8 |
| S150N (lube base oil) | 55 | 531 | 8 |
| Marcol® 52/Primol® 355 (white oil mixture) | 95 | 355 | 5 |
| Primol® 355 (white oil) | 155 | 630 | 32 |
| S600N (lube base oil) | 255 | 800 | 8 |
| S600N (lube base oil) | 255 | 7000 | 400 |
| Bright Stock (lube base oil) | 2100 | 550 | 70 |

Example 7

By way of a further example, it has been demonstrated that wax crystals, which may be present as a dispersed contaminant phase in a lubricating oil, may be made to agglomerate in the bulk of the liquid by the injection of free excess charge, such as would occur in the upper section 46 of the apparatus of Figures 7 and 8.

Marcol®52, a highly refined white oil manufactured by Exxon Chemical Company, was mixed with a waxy raffinate from a commercial lubricating oil dewaxing plant which contained 15% wax. The wax content of the final mixture was 0.25%. The mixture was stirred at an elevated temperature of about 60°C. Upon cooling wax crystals were precipitated from the mixture to form a dispersion of wax in the white oil.

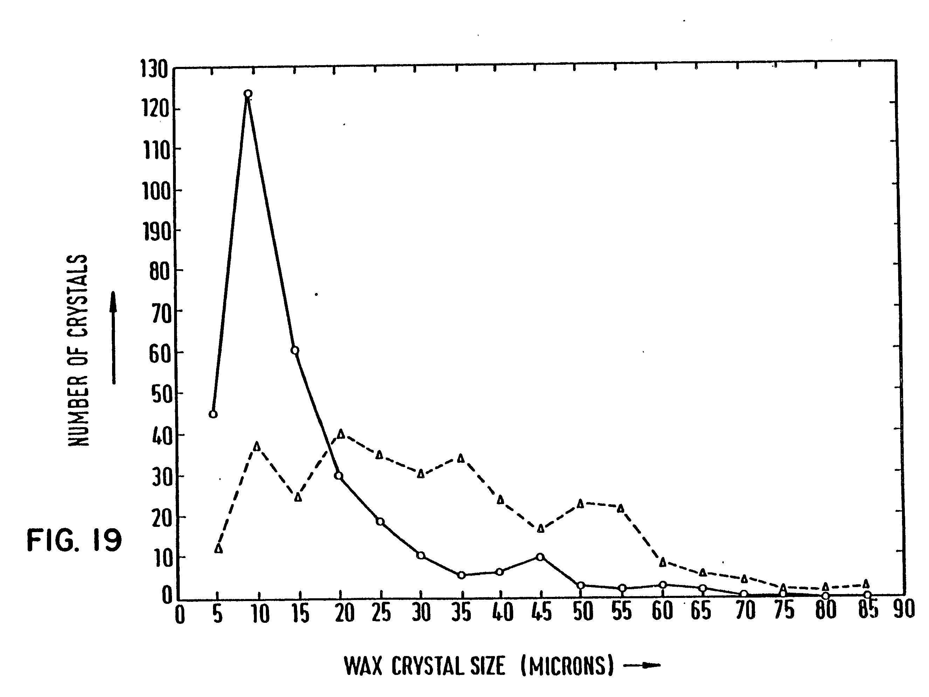

The wax-containing white oil was passed through a charge injector and into a vessel such as shown in Figure 7, except that the separation vessel contained no glass beads. The wax crystal size distribution upon sampling with an optical image analyzer and without charge injection is shown as the continuous curve in Figure 19. The size distribution had a mean value of 14 μm diameter and 70% of the crystals were smaller than 20 μm.

Subsequent to passing the two-phase mixture through the apparatus with charge injection occurring, the measured size distribution is shown on the dashed, broken line in Figure 19. It can be seen that a significant amount of agglomeration occurred increasing the mean wax crystal size to 30 μm with the particles below 20 μm decreasing their fraction to 23%.

## Claims

1. A method for separation of a dispersed phase from a continuous liquid phase by introducing net unipolar free charge into the mixture of said phases so as to bring about migration of the dispersed phase within the phase mixture, and allowing the migrating dispersed phase to accumulate on at least one collector surface which is disposed in contact with the charged mixture, characterised in that the net unipolar free charge is introduced, substantially, by electron emission in the absence of ionic dissociation, which causes the continuous phase to act as a medium through which volumetric distribution of the introduced charge takes place by charge motion relative to the continuous liquid phase.

2. A method of clarifying a contaminated liquid, wherein an additive is introduced into the contaminated liquid, said additive having the property of combining with the contaminant so as to form a dispersion suspended in the liquid, and wherein said dispersion is separated by a method according to Claim 1.

3. A method according to Claim 2 for separating a dissolved contaminant from a liquid, wherein the additive comprises finely divided particles.

4. A method according to Claim 2 for removal of vacuum resid from a hydrocarbon oil mixture boiling in the lubricating oil range, wherein the additive comprises carbon black particles.

5. A method as claimed in Claim 1 for separating wax dissolved in a hydrocarbon oil mixture boiling in the lubricating oil range, wherein the free charge is introduced into the wax-containing oil mixture by injecting charge into a charge carrier liquid which is substantially free of wax and then bringing the carrier liquid and wax-containing oil mixture into contact with one another.

6. Apparatus for use in separating a dispersed phase from a continuous liquid phase, the phases together forming a phase mixture, comprising:
means (2) for constraining said phase mixture to flow through an enclosed space filled by said phase mixture;
an exit orifice (3) through which the phase mixture leaving the enclosed space passes;
means (3, 4) arranged to introduce charge, preferably free net unipolar charge, into the flowing phase mixture before the phase mixture enters said exit orifice (3); and
a separator (6) arranged to receive the charged phase mixture from said orifice, said separator (6) having at least one dispersed phase collector surface disposed in contact with said charged phase mixture so that dispersed phase migrating in said phase mixture due to the introduced charge accumulates on said collector surface(s); characterised in that
said apparatus comprises means provided a gas or vapour space (11) between said exit orifice (3) and said separator (6) such that the charged phase mixture passes through said gas or vapour space (11) as a spray or stream enveloped by gas or vapour in said gas or vapour space (11).

7. Apparatus as claimed in Claim 6, wherein the separator (6) comprises a separation vessel (6) for containing said phase mixture, said vessel having a collector surface which is a surface region on the inside of the wall of the separation vessel (6).

8. Apparatus as claimed in Claim 6, wherein the separator (6) comprises a separation vessel for containing said phase mixture, said vessel having a plurality of collector surfaces located within the interior space defined by the separation vessel (6).

9. Apparatus as claimed in Claim 8, wherein said collector surfaces are the surfaces of a plurality of beads (33) of low electrical conductivity arranged as a bed of densely packed beads.

10. Apparatus as claimed in Claim 9, wherein said beads (33) are made of plastics material, ceramic material or glass.

11. Apparatus as claimed in any one of Claims 6 to 9 for use in separating a dispersed liquid phase from a continuous liquid phase, wherein the or each collector surface is a surface region of a collector element (101) of porous material, said porous material having a sufficient porosity as to absorb dispersed liquid phase into its pores and thereby trap dispersed phase liquid droplets at separate sites on said surface region for promoting droplet coalescence and growth with further droplets migrating to those sites due to the effect of the introduced charge.

12. Apparatus as claimed in Claim 11, wherein the absorptivity of the porous material is in the range 0.1 to 40% by weight.

13. Apparatus as claimed in Claim 11 or 12, wherein the porous material comprises polystyrene, polycarbonate, cellulose acetate, or silica gel.

14. Apparatus according to Claim 6 for use in separating wax particles from a hydrocarbon oil mixture boiling in the lubricating oil range, in which mixture the wax forms a dispersion, wherein the separator (58) comprises a rotary collector drum (61) whose outer cylindrical surface comprises a collector surface and which is provided with means arranged to rotate the drum (61) about a substantially horizontal axis and means (60) for maintaining a quantity of wax-containing oil mixture, into which free excess charge has been introduced by the charge introducing means (1), in contact with the outer cylindrical surface of the collector drum, so as to cause wax particles to collect and deposit on the drum collector surface while the drum rotates, and be separated by the drum rotation from said quantity of oil mixture, there being a scraper (62) positioned immediately adjacent the drum collector surface for scraping deposited wax off the drum collector surface as the drum rotates.

15. Apparatus as claimed in Claim 14, wherein said means (60) for maintaining a quantity of wax-containing oil mixture in contact with the outer cylindrical surface of the collector drum (61) comprises a trough (60) and the collector drum (61) is positioned with its wax collector surface partially submerged in the charged oil mixture in the trough (60).

16. Apparatus as claimed in Claim 15, wherein means, including a bypass line (57), is provided for diverting a proportion of the wax-containing oil mixture from the free excess charge introducing means (1) and introducing the uncharged diverted proportion and the remaining, charged, proportion into the trough (60), so that the charged and uncharged proportions become recombined and the charge becomes distributed within the recombined portions.

17. Apparatus for use in separating dissolved wax from a hydrocarbon oil mixture boiling in the lubricating oil range, comprising means (82) for reducing the solubility for the wax so as to cause dissolved wax in the oil mixture to form a dispersion of wax particles in the oil mixture, and apparatus as claimed in any one of Claims 6 to 9 or of Claims 13 to 15 for use in separating the wax particles from the oil mixture.

18. Apparatus as claimed in Claim 17, wherein the solubility reducing means comprises means for adding a vaporizable oil solvent liquid to the oil mixture and means (82) for vaporizing the oil solvent liquid, so as to cool the oil mixture.

19. Apparatus as claimed in Claim 17 or 18, wherein the solubility reducing means comprises means for adding an oil solvent liquid to the oil mixture and means (80) for cooling the oil mixture by indirect heat exchange with a cooling medium.

20. Apparatus as claimed in any one of Claims 6 to 19, wherein the charge introducing means (1) comprises a charge injector arranged to inject said free excess charge into a stream of the phase mixture.

21. Apparatus for use in separating a dispersed phase from a continuous liquid phase, the phases together forming a phase mixture, comprising:

means (54) arranged to deliver said phase mixture;

means (2) for constraining a substantially contaminant-free liquid to flow through an enclosed space filled by substantially contaminant-free liquid;

an exit orifice (3) through which the substantially contaminant-free liquid leaving the enclosed space passes;

means (3, 4) arranged to introduce net unipolar free charge into the flowing substantially contaminant-free liquid before it enters said exit orifice (3);

a separator (6) arranged to receive the charged substantially contaminant-free liquid from said orifice (3) and phase mixture from said delivery means (54) which together form the liquid contents of the separator, said separator having at least one dispersed phase collecting surface disposed in contact with said liquid contents so that dispersed phase migrating in the liquid contents due to the introduced free charge accumulates on said collector surface(s); and

means providing a gas or vapour space (11) between said exit orifice (3) and said separator (6) such that the charged substantially contaminant-free liquid passes through said gas or vapour space (11) as a spray or stream enveloped by gas or vapour in said gas or vapour space (11).

## Patentansprüche

1. Verfahren zum Trennen einer dispergierten Phase aus einer zusammenhängenden Flüssigphase durch Einleiten von nettounipolarer freier Ladung in das Phasengemisch, um eine Wanderung der dispergierten Phase in dem Phasengemisch zu bewirken, und Zulassen der Wanderung der dispergierten Phase zur Ansammlung an mindestens einer Kollektorfläche, die in Kontakt mit der geladenen Mischung steht, dadurch gekennzeichnet, daß netto-unipolare freie Ladung im wesentlichen durch Elektronenemission beim Fehlen von ionischer Dissoziation eingeleitet wird, was die zusammenhängende Phase dazu bringt, als Medium zu wirken, über das eine volumetrische Verteilung der eingeleiteten Ladung durch Ladungswanderung in bezug auf die zusammenhängende flüssige Phase stattfindet.

2. Verfahren zum Reinigen einer kontaminierten Flüssigkeit, bei dem ein Additiv in die kontaminierte Flüssigkeit eingeleitet wird, welches die Eigenschaft hat, sich mit der Verunreinigung zu verbinden, um eine in der Flüssigkeit suspendierte Dispersion zu bilden, und wobei die Dispersion durch ein Verfahren nach Anspruch 1 getrennt wird.

3. Verfahren nach Anspruch 2 zum Trennen einer gelösten Verunreinigung aus einer Flüssigkeit, wobei das Additiv feinverteilte Teilchen aufweist.

4. Verfahren nach Anspruch 2 zum Entfernen von Vakuumrückstand aus einer Kohlenwasserstoffölmischung, die im Bereich von Schmieröl siedet, wobei das Additiv Rußteilchen aufweist.

5. Verfahren nach Anspruch 1 zum Abscheiden von Wachs, das in einer Kohlenwasserstoffölmischung gelöst ist, die im Bereich von Schmieröl siedet, wobei die freie Ladung in die wachshaltige Ölmischung eingeleitet wird, indem Ladung in eine Ladungsträgerflüssigkeit injiziert wird, die weitgehend frei von Wachs ist, und danach die Trägerflüssigkeit und die wachshaltige Ölmischung in Kontakt miteinander gebracht werden.

6. Vorrichtung zur Verwendung bei der Trennung einer dispergierten Phase von einer zusammenhängenden Flüssigphase, wobei die Phasen gemeinsam ein Phasengemisch bilden, mit:

Mitteln (2) zum Veranlassen, daß das Phasengemisch durch einen geschlossenen Raum elgeitet wird, der von dem Phasengemisch gefüllt ist;

einer Ausstoßöffnung (3), durch die das Phasengemisch beim Verlassen des geschlossenen Raumes tritt;

Mitteln (3, 4), die angeordnet sind, um Ladung, vorzugsweise freie netto-unipolare Ladung in das fließende Phasengemisch einzuleiten, ehe das Phasengemisch in die Auslaßöffnung (3) tritt; und mit

einem Abscheider (6), der so angeordnet ist, daß er das geladene Phasengemisch aus der Öffnung aufnimmt, wobei der Abscheider (6) mindestens eine Kollektorfläche für die dispergierte Phase besitzt, die in Kontakt mit dem geladenen Phasengemisch steht, so daß die in dem Phasengemisch aufgrund der eingeleiteten Ladung wandernde dispergierte Phase an der Kollektorfläche(n) sammelt; dadurch gekennzeichnet,

daß die Vorrichtung Mittel aufweist, die einen Gas- oder Dampfraum (11) zwischen der Auslaßöffnung (3) und dem Abscheider (6) in der Weise vorsehen, daß das geladene Phasengemisch durch den Gas- oder Dampfraum (11) als Spray oder als Strom tritt, der von dem Gas oder Dampf in dem Gas- oder Dampfraum (11) umschlossen ist.

7. Vorrichtung nach Anspruch 6, wobei der Abscheider (6) ein Scheidergefäß (6) aufweist, um das Phasengemisch aufzunehmen, wobei das Gefäß eine Kollektorfläche besitzt, die ein Oberflächebereich an der Innenseite der Wand des Scheidergefäßes (6) ist.

8. Vorrichtung nach Anspruch 6, wobei der Abscheider (6) ein Scheidergefäß zur Aufnahme des Phasengemisches aufweist, wobei das Gefäß eine Anzahl von Kollektorflächen besitzt, die in dem von dem Scheidergefäß (6) gebildeten Innenraum angeordnet sind.

9. Vorrichtung nach Anspruch 8, wobei die Kollektorflächen die Oberflächen einer Anzahl von Kugeln (33) von geringer elektrischer Leitfähigkeit sind, die als Bett aus dichtgepackten Perlen angeordnet sind.

10. Vorrichtung nach Anspruch 9, wobei die Kugeln (33) aus Kunststoff, Keramik oder Glas gemacht sind.

11. Vorrichtung nach einem der Ansprüche 6 bis 9 zur Verwendung bei der Abscheidung einer dispergierten flüssigen Phase aus einer zusammenhängenden flüssigen Phase, wobei die oder jede Kollektorfläche ein Oberflächenbereich eines Kollektorelements aus porösem Material ist, das eine hinreichende Porosität besitzt, um die dispergierte flüssige Phase in ihren Poren zu absorbieren und dadurch die Flüssigkeitströpfchen der dispergierten Phase an getrennten Orten auf dem Oberflächegebiet zu halten, um eine Tröpfchenzusammenballung und Wachstum zu unterstützen, wobei weitere Tröpfchen zu diesen Stellen aufgrund der Wirkung der eingeleiteten Ladung wandern.

12. Vorrichtung nach Anspruch 11, wobei die Absorptionsfähigkeit des porösen Materials im Berreich von 0,1 bis 40 Gew.% liegt.

13. Vorrichtung nach Anspruch 11 oder 12, wobei das poröse Material Polystyrol, Polycarbonat, Celluloseacetat oder Silikagel aufweist.

14. Vorrichtung nach Anspruch 6 zur Verwendung beim Abscheiden von Wachsteilchen aus einer Kohlenwasserstoffölmischung, die im Bereich von Schmieröl siedet, wobei das Gemisch eine Dispersion bildet und der Abscheider (58) eine sich drehende Kollektortrommel (61) aufweist, deren äußere Zylinderfläche eine Kollektorfläche aufweist und die mit Mitteln versehen ist, die die Trommel (61) um eine im wesentlichen horizontale Achse drehen, und mit Mitteln (60) um eine Menge von wachshaltiger Ölmischung, in die freie Überschußladung durch das Ladungseinleitungsmittel (1) eingeleitet wurde, in Kontakt mit der äußeren Zylinderfläche der Kollektortrommel zu halten, so daß die Wachsteilchen veranlaßt werdne, sich an der Trommelkollektorfläche zu sammeln und abzulagern, während sich die Trommel dreht, und um durch die Trommeldrehung aus der Menge des Ölgemisches abgeschieden zu werden, wobei ein Schaber (62) unmittelbar an der Trommelkollektorfläche angeordnet ist, um abgelagertes Wachs während der Drehung der Trommel von der Trommelkollektorfläche abzuschaben.

15. Vorrichtung nach Anspruch 14, wobei das Mittel (60), das eine Menge von wachshaltigem Ölgemisch in Kontakt mit der Außenzylinderfläche der Kollektortrommel (61) hält, einen Trog (60) aufweist und die Kollektortrommel (61) mit ihrer Wachskollektorfläche teilweise in das geladene Ölgemisch im Trog (60) taucht.

16. Vorrichtung nach Anspruch 15, wobei Mittel, einschließlich einer Bypassleitung (57) vorgesehen sind, um einen Teil des wachshaltigen Ölgemisches von dem Einleitungsmittel (1) für freie Überschußladung abzuzweigen und den ungeladenen, abgezweigten Teil und den geladenen Rest in den Trog (60) zu leiten, so daß sich der geladene und der ungeladene Anteil wieder verbinden und die Ladung sich mit den rekombinierten Teilen verteilt.

17. Vorrichtung zur Verwendung beim Abscheiden von gelöstem Wachs aus einem Kohlenwasserstoffölgemisch, das im Bereich von Schmieröl siedet, mit Mitteln (82) zum Herabsetzen der Löslichkeit von Wachs, so daß das gelöste Wachs in dem Ölgemisch eine Dispersion von Wachspartikeln in Ölgemisch bildet, und mit einer Vorrichtung nach einem der Ansprüche 6 bis 9 oder 13 bis 15 zur Verwendung beim Abscheiden der Wachspartikel aus dem Ölgemisch.

18. Vorrichtung nach Anspruch 17, wobei das Löslichkeitsherabsetzungsmittel Mittel zum Zusetzen einer Lösungsmittelflüssigkeit aus verdampfbarem Öl zu dem Ölgemisch und Mittel (82) aufweist, um die Öllösungsmittelflüssigkeit zu verdampfen, so daß das Ölgemisch gekühlt wird.

19. Vorrichtung nach Anspruch 17 oder 18, wobei das Löslichkeitsherabsetzungsmittel Mittel zum Zusetzen einer Öllösungsmittelflüssigkeit zu dem Ölgemisch und Mittel (80) aufweist, um das Ölgemisch durch indirekten Wärmeaustausch mit einem Kühlmittel zu kühlen.

20. Vorrichtung nach einem der Ansprüche 6 bis 19, wobei das Ladungseinleitungsmittel (1) einen Ladungsinjektor aufweist, der angeordnet ist, um freie Überschußladung in einer Strom des Phasengemisches zu injizieren.

21. Vorrichtung zur Verwendung beim Abscheiden einer dispergierten Phase aus einer zusammenhängenden flüssigen Phase, wobei die Phasen zusammen ein Phasengemisch bilden, mit:

Mitteln (54) zum Zuführen des Phasengemisches;

Mitteln (2) zum Leiten einer im wesentlichen verunreinigungsfreien Flüssigkeit durch einen geschlossenen Raum, der von im wesentlichen verunreinigungsfreier Flüssigkeit gefüllt ist;

einer Auslaßöffnung (3), durch die die im wesentlichen verunreinigungsfreie Flüssigkeit tritt, wenn sie den geschlossenen Raum verläßt;

Mitteln (3, 4), die angeordnet sind, um nettounipolare freie Ladung in die strömende, im wesentlichen verunreinigungsfreie Flüssigkeit einzuleiten, bevor sie in die Auslaßöffnung (3) tritt;

einem Abscheider (6), der angeordnet ist, um die aufgeladene, im wesentlichen verunreinigungsfreie Flüssigkeit aus der Öffnung (3) und ein Phasengemisch aus der Zuführeinrichtung (54) aufzunehmen, die gemeinsam den Flüssigkeitsinhalt des Abscheiders bilden, der mindestens eine Kollektorfläche für die dispergierte Phase besitzt, die in Kontakt mit dem Flüssigkeitsinhalt steht, so daß sich die dispergierte Phase, die in die Flüssigkeitsinhalte wandert, aufgrund der eingeleiteten freien Ladung an der Kollektorfläche(n) ansammelt; und mit

Mitteln, die einen Gas- oder Dampfraum (11) zwischen der Auslaßöffnung (3) und dem Abscheider (6) schaffen, so daß die geladene, im wesentlichen verunreinigungsfreie Flüssigkeit durch diesen Gas- oder Dampfraum (11) als Spray oder als Strom tritt, der von Gas oder Dampf in dem Gas- oder Dampfraum (11) umgeben ist.

**Revendications**

1. Un procédé de séparation d'une phase dispersée à partir d'une phase liquide continue en introduisant une charge nette unipolaire libre dans le mélange desdites phases de façon à provoquer la migration de la phase dispersée dans le mélange de phase, et en permettant à la phase migrante dispersée de s'accumuler sur au moins une surface de collecteur qui est disposée en contact avec le mélange chargé, caractérisé en ce que la charge nette unipolaire libre est introduite essentiellement par émission d'électrons en l'absence de dissociation ionique, ce qui fait que la phase continue joue le rôle d'un milieu à travers lequel la distribution volumétrique de la charge introduite se produit par mouvement de charge par rapport à la phase liquide continue.

2. Un procédé pour épurer un liquide contaminé, dans lequel on introduit un additif dans le liquide contaminé, ledit additif présentant la propriété de se combiner avec le contaminant de façon à former une dispersion en suspension dans le liquide, et dans laquelle ladite dispersion est séparée par une méthode selon la revendication 1.

3. Un procédé selon la revendication 2 pour séparer un contaminant dissout d'un liquide dans lequel l'additif comporte des particules finement divisées.

4. Un procédé selon la revendication 2 pour éliminer un résidu sous vide à partir d'un mélange d'hydrocarbures bouillant dans la plage des huiles lubrifiantes, dans laquelle l'additif comporte des particules de noir de carbone.

5. Un procédé tel que revendiqué dans la revendication 1 pour séparer une cire dissoute dans un mélange d'hydrcarbures bouillant dans la plage des huiles de lubrification, dans lequel la charge libre est introduite dans le mélange d'huiles contenant de la cire en injectant une charge dans un liquide support de charge qui est sensiblement exempt de cire et en amenant le liquide support et le mélange d'huile contenant de la cire en contact, l'un avec l'autre.

6. Appareil destiné à être utilisé pour séparer une phase dispersée d'une phase liquide continue, les phases formant ensemble un mélange de phases, comportant:

un dispositif (2) pour obliger ledit mélange de phase à s'écouler à travers un espace clos rempli par ledit mélange de phase;

un orifice de sortie (3) à travers le quel le mélange de phase quittant l'espace clos s'écoule;

un dispositif (3, 4) agencé pour introduire une charge, de préférence une charge nette unipolaire libre dans le mélange de phase en écoulement avant que le mélange de phase ne pénètre dans ledit orifice de sortie (3); et

un séparateur (6) agencé pour recevoir le mélange· de phase chargé dudit orifice, ledit séparateur (6) présentant au moins une surface collectrice pour phase dispersée, disposée en contact avec ledit mélange de phase chargé de façon que la phase dispersée migrant dans ledit mélange de phase du fait de l'introduction de la charge s'accumule sur la (ou les) surface(s) collectrice(s); caractérisé en ce que

ledit appareil comporte des moyens mélangeant un espace de gaz ou de vapeur (11) entre ledit orifice de sortie (3) et ledit séparateur (6) de façon que le mélange de phase chargé passe à travers ledit espace de gaz ou de vapeur (11) sous la forme d'une pulvérisation ou d'un courant enveloppé par le gaz ou la vapeur dans ledit espace de gaz ou de vapeur (11).

7. Appareil tel que revendiqué dans la revendication 6, dans lequel le séparateur (6) comporte un récipient de séparation (6) pour contenir ledit mélange de phase, ledit récipient présentant une surface collectrice qui est une zone de surface sur l'intérieur de la paroi du récipient de séparation (6).

8. Appareil tel que revendiqué dans la revendication 6, dans lequel le séparateur (6) comprend un récipient de séparation destiné à contenir ledit mélange de phase, ledit récipient présentant une pluralité de surfaces collectrices, disposées à l'intérieur de l'espace interne défini par le récipient de séparation (6).

9. Appareil tel que revendiqué dans la revendication 8, dans lequel lesdites surfaces collectrices sont les surfaces d'une pluralité de perles (33) de faible conductivité électrique agencées sous la forme d'un lit de perles entassées de façon compacte.

10. Appareil tel que revendiqué dans la revendication 9 dans lequel lesdites perles (33) sont fabriquées en matière plastique, en matière céramiqué ou en verre.

11. Appareil tel que revendiqué dans l'une quelconque des revendications 6 à 9, destinée à être utilisé dans la séparation d'une phase liquide dispersée à partir d'une phase liquide continue, dans lequel la ou chaque surface collectrice est une zone surfacique d'un élément collecteur (101) en matériau poreux, ledit matériau poreux présentant une porosité suffisante de façon à absorber la phase liquide dispersée dans ses pores et à piéger ainsi les gouttelettes dispersées du liquide de phase en des endroits séparés sur ladite zone surfacique afin de favoriser la coalescence et la croissance d'autres gouttelettes avec d'autres gouttelettes migrant vers ces endroits du fait de l'action de la charge introduite.

12. Appareil tel que revendiqué dans la revendication 11, dans lequel la capacité d'absorption du matériau poreux se situe dans la plage de 0,1 à 40% en poids.

13. Appareil tel que revendiqué dans la revendication 11 ou 12, dans lequel le matériau poreux comprend du polystyrène, du polycarbonate, de l'acétate de cellulose ou du gel de silice.

14. Appareil selon la revendication 6, destiné à être utilisé pour séparer des particules de cire à partir d'un mélange d'hydrocarbures bouillant dans la plage d'huiles lubrifiantes, mélange dans lequel la cire forme une dispersion, dans lequel le séparateur (58) comprend un tampon rotatif collecteur (61) dont la surface cylindrique externe comprend une surface collectrice et qui est pourvu de moyens agencés pour faire tourner le tambour (61) autour d'un axe sensiblement horizontal et des moyens (60) pour maintenir une quantité de mélange d'huiles contenant de la cire, dans lequel un excès de charge libre a été introduit par le dispositif d'introduction de charge (1) en contact avec la surface cylindrique extérieure du tambour collecteur, de façon à amener les particules de cire à se rassembler et à se déposer sur la surface collectrice du tambour pendant que le tambour tourne, et à se séparer par la rotation du tambour de ladite quantité de mélange d'huile, un racleur (62) étant positionné immédiatement au voisinnage de la surface collectrice du tambour pour racler la cire déposée à partir de la surface collectrice du tambour pendant que le tambour tourne.

15. Appareil tel que revendiqué dans la revendication 14, dans lequel lesdits moyens (60) pour maintenir une quantité de mélange d'huiles contenant de la cire en contact avec la surface cylindrique externe du tambour collecteur (61) comprennent un bac (60) tandis que le tambour collecteur (61) est positionné avec sa surface collectrice de cire partiellement immergée dans le mélange d'huiles chargées dans le bac (60).

16. Appareil tel que revendiqué dans la revendication 15, dans lequel il est prévu des moyens comportant une conduite de dérivation (57) pour dériver une proportion du mélange d'huile contenant de la cire à partir du dispositif d'introduction d'un excès de charge libre (1) et pour introduire la proportion dérivée non chargée, et la proportion restante chargée dans le bac (60), de sorte que les proportions chargées et non chargées puissent se recombiner et que la charge soit distribuée dans les parties recombinées.

17. Appareil destiné à être utilisé pour séparer de la cire dissoute à partir d'un mélange d'hydrocarbures bouillant dans la plage d'huiles librifiantes, comportant des moyens (82) pour réduire la solubilité de la cire de façon à emener la cire dissoute dans le mélange d'huiles à former une dispersion de particules de cire dans le mélange d'huiles, et appareil tel que revendiqué dans l'une quelconque des revendications 6 à 9 ou des revendications 13 à 15, destiné à être utilisé pour séparer les particules de cire du mélange d'huiles.

18. Appareil tel que revendiqué dans la revendication 17, dans lequel les moyens réducteurs de solubilité comportent des moyens pour ajouter un solvant liquide d'huile vaporisable pour l'huile ou mélange d'huiles et des moyens (82) pour vaporiser le solvant liquide d'huiles, de façon à refroidir le mélange d'huiles.

19. Appareil tel que revendiqué dans la revendication 17 ou 18 dans lequel les moyens réducteurs de solubilité comportent des moyens pour ajouter un solvant liquide huileux au mélange d'huiles et des moyens (80) pour refroidir le mélange d'huiles par échange indirect de chaleur avec un milieu de refroidissement.

20. Appareil tel que revendiqué dans l'une quelconque des revendications 6 à 19, dans leqel le dispositif introducteur de charges (1) comporte un injecteur de charges agencé pour injecter pour ledit excès de charge libre dans un courant du mélange de phase.

21. Appareil destiné à être utilisé dans la séparation d'une phase dispersée à partir d'une phase liquide continue, les phases formant ensemble un mélange de phases, comportant:

des moyens (54) agencés pour délivrer ledit mélange de phase;

des moyens (2) pour obliger un liquide sensiblement exempt de contaminant à s'écouler à travers un espace clos rempli d'un liquide sensiblement exempt de contaminant;

un orifice de sortie (3) à travers lequel le liquide sensiblement exempt de contaminant, quittant l'espace clos, passe;

des moyens (3, 4) agencés pour introduire une charge libre unipolaire nette dans le liquide s'écoulant, sensiblement exempt de contaminant, avant qu'il ne pénètre dans ledit orifice de sortie (3);

un séparateur (6) agencé pour recevoir le liquide chargé, sensiblement exempt de contaminant à partir dudit orifice (3) et le mélange de phases à partir dudit moyen de distribution (54) qui forme conjointement les contenus du liquide du séparateur, ledit séparateur ayant au moins une surface collectrice de phase dispersée disposée en contact avec lesdits contenus du liquide de sorte que la phase dispersée migre dans les continus du liquide grâce à la charge libre introduire accumulée sur ladite (lesdites) surface(s) collectrice(s); et

des moyens ménageant un espace de gaz ou de vapeur (11) entre ledit orifice de sortie (3) et ledit séparateur (6) de sorte que le liquide chargé, sensiblement exempt de contaminant passe à travers ledit espace gazeux ou de vapeur (11) sous la forme d'une pulvérisation ou d'un courant enveloppé par du gaz ou de la vapeur dans ledit espace gazeux ou de vapeur (11).

FIG. 1

FIG. 2

FIG. 3

FIG. 4

FIG. 5

FIG. 5a

FIG. 5b

5

FIG. 6

FIG. 6b

FIG. 6a

FIG. 6c

FIG. 7

FIG. 8

FIG. 9

FIG. 10

FIG. II

FIG. 12

FIG. 13

ppm CARBON BLACK

FIG. 14

ppm CARBON BLACK

FIG. 15

15

FIG. 16

Vac Resid in
SIOON (ppm)

Passes · Through Glass Bed ⟶

500
400
300
200
100

1    2    3    4

a
b
c

FIG. 17

FIG. 18

FIG. 19

NUMBER OF CRYSTALS

WAX CRYSTAL SIZE (MICRONS) ⟶